Europäisches Patentamt

European Patent Office

Office européen des brevets

(19)

(11) **EP 1 604 527 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
*H04N 7/24* (2006.01)   *H04N 1/32* (2006.01)
*G10L 19/00* (2006.01)

(21) Anmeldenummer: **04729869.0**

(86) Internationale Anmeldenummer:
**PCT/EP2004/004481**

(22) Anmeldetag: **28.04.2004**

(87) Internationale Veröffentlichungsnummer:
**WO 2004/102969 (25.11.2004 Gazette 2004/48)**

(54) **VORRICHTUNG UND VERFAHREN ZUM EINBETTEN EINER BINÄREN NUTZINFORMATION IN EIN TRÄGERSIGNAL**

DEVICE AND METHOD FOR EMBEDDING A BINARY PIECE OF USER DATA IN A CARRIER SIGNAL

DISPOSITIF ET PROCEDE POUR INCORPORER UNE INFORMATION UTILE DANS UN SIGNAL PORTEUR

(84) Benannte Vertragsstaaten:
**AT CH DE FR GB LI**

(30) Priorität: **15.05.2003 DE 10321983**

(43) Veröffentlichungstag der Anmeldung:
**14.12.2005 Patentblatt 2005/50**

(73) Patentinhaber: **Fraunhofer-Gesellschaft zur Förderung der angewandten Forschung e.V. 80686 München (DE)**

(72) Erfinder:
• **SCHULLER, Gerald**
  **99089 Erfurt (DE)**
• **GEIGER, Ralf**
  **91058 Erlangen (DE)**
• **KOLLER, Jürgen**
  **81369 Muenchen (DE)**

(74) Vertreter: **Zinkler, Franz et al Schoppe, Zimmermann, Stöckeler & Zinkler Postfach 246 82043 Pullach bei München (DE)**

(56) Entgegenhaltungen:
**WO-A-97/33391      US-A1- 2002 164 048**

• **JUN TIAN ED - INSTITUTE OF ELECTRICAL AND ELECTRONICS ENGINEERS: "High capacity reversible data embedding and content authentication" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, Bd. VOL. 1 OF 6, 6. April 2003 (2003-04-06), Seiten III517-III520, XP010639123 ISBN: 0-7803-7663-3**
• **JONG RYUL KIM ET AL: "A robust wavelet-based digital watermarking using level-adaptive thresholding" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24. Oktober 1999 (1999-10-24), Seiten 226-230, XP010369108 ISBN: 0-7803-5467-2**
• **GEIGER R ET AL: "Fine grain scalable perceptual and lossless audio coding based on INTMDCT" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, Bd. VOL. 1 OF 6, 6. April 2003 (2003-04-06), Seiten V445-V448, XP010639304 ISBN: 0-7803-7663-3**

EP 1 604 527 B1

• **GEIGER R ET AL INSTITUTE OF ELECTRICAL AND ELECTRONICS ENGINEERS: "Integer low delay and MDCT filter banks" CONFERENCE RECORD OF THE 36TH. ASILOMAR CONFERENCE ON SIGNALS, SYSTEMS, & COMPUTERS. PACIFIC GROOVE, CA, NOV. 3 - 6, 2002, ASILOMAR CONFERENCE ON SIGNALS, SYSTEMS AND COMPUTERS, NEW YORK, NY : IEEE, US, Bd. VOL. 1 OF 2. CONF. 36, 3. November 2002 (2002-11-03), Seiten 811-815, XP010638316 ISBN: 0-7803-7576-9**

**Beschreibung**

Die vorliegende Erfindung bezieht sich auf das Einbetten von Nutzinformationen in ein Trägersignal und das Extrahieren von Nutzinformationen aus dem Trägersignal, wobei das Trägersignal ein Audiosignal, ein Videosignal oder ein Multimediasignal sein kann, das Audio und/oder Videoinformationen umfaßt.

In der Technik existieren verschiedene Anwendungen bzw. verschiedene Zielrichtungen zum Einbetten von Zusatzinformationen in digitale Signale. Solche Konzepte sind unter dem Stichwort Wasserzeichenverfahren bzw. "Watermarking" in der Technik bekannt.

Aus der WO 97/33391 ist ein Codierverfahren zur Einbringung eines nicht hörbaren Datensignals in ein Audiosignal bekannt. Hierbei wird das Audiosignal, in das das nicht hörbare Datensignal eingebracht werden soll, mittels einer Fourier-Transformation oder einer modifizierten diskreten Cosinustransformation in den Frequenzbereich umgewandelt, um mittels eines psychoakustischen Modells die Maskierungsschwelle des Audiosignals zu bestimmen. Das Datensignal, das in das Audiosignal eingebracht werden soll, wird mit einem Pseudorauschsignal multipliziert, um ein frequenzmäßig gespreiztes Datensignal zu schaffen. Das frequenzmäßig gespreizte Datensignal wird dann mit der psychoakustischen Maskierungsschwelle gewichtet, derart, daß die Energie des frequenzmäßig gespreizten Datensignals immer unterhalb der Maskierungsschwelle liegt. Schließlich wird das gewichtete Datensignal dem Audiosignal überlagert, wodurch ein Audiosignal erzeugt wird, in das das Datensignal unhörbar eingebracht ist. Das Datensignal kann zum einen dazu verwendet werden, die Reichweite eines Senders zu ermitteln. Alternativ kann das Datensignal zur Kennzeichnung von Audiosignalen verwendet werden, um eventuelle Raubkopien ohne weiteres zu identifizieren, da jeder Tonträger beispielsweise in Form einer Compaktdisk ab Werk mit einer individuellen Kennung versehen wird. Weitere beschriebene Anwendungsmöglichkeiten des Datensignals bestehen im Fernsteuern von Audiogeräten in Analogie zum "VPS"-Verfahren beim Fernsehen.

Die EP 1149480 B1 offenbart ein Verfahren und eine Vorrichtung zum Einbringen von Informationen in ein Audiosignal und Verfahren und Vorrichtungen zum Ermitteln von in einem Audiosignal eingebrachten Informationen. Hierbei werden die Informationen zunächst dahingehend aufbereitet, daß die in das Audiosignal einzubringenden Informationen über zumindest zwei Informationskanäle verteilt werden. Ein erster Informationskanal enthält Kopierinformationen, die üblicherweise durch eine relativ geringe Datenmenge dargestellt werden und dafür da sind, um ein unerlaubtes Kopieren zu unterbinden. Weitere Informationen zur Identifikation des Audiosignals werden in einen zweiten Informationskanal eingebracht. Die beiden Kanäle sind voneinander unabhängig decodierbar. Jedem dieser Kanäle ist eine unterschiedliche Spreizsequenz zugeordnet, so daß die einzelnen Kanäle getrennt voneinander decodierbar sind.

Die Hauptcharakteristika solcher Wasserzeichensysteme bestehen in dem Einfluß auf die Audioqualität einerseits, einer hohen Robustheit andererseits, damit das Wasserzeichen gegen unerlaubte Eingriffe sicher ist, und ferner in der Wasserzeichendatenrate. Diese drei Ziele sind gegenläufig zueinander, dahingehend, daß ein hoher Pegel an Robustheit beispielsweise mit einem Verlust an Datenrate oder einem Verlust an Audioqualität einhergeht. Ferner wird eine hohe Datenrate entweder dazu führen, daß die Robustheit leidet, oder daß die Audioqualität des Signals, in das die Audioinformationen eingebracht worden sind, wiederum leidet.

In der Fachveröffentlichung "New High Data Rate Audio Watermarking based on SCS (Scalar Costa Scheme)", S. Siebenhaar, u. a., AES Convention Paper 5645, 5. bis 8. Oktober 2002, Los Angeles, CA, USA, wird ein Audio-Watermarking-Verfahren beschrieben, bei dem das Audiosignal zunächst segmentiert und dann gefenstert wird und dann in den Frequenzbereich transformiert wird. Hier findet ein SCS-Watermark-Embedding statt, um dann das Ergebnis wieder in den Zeitbereich zu transformieren, einer Fensterung zu unterziehen und dann gegebenenfalls unter Berücksichtigung einer Blocküberlappung schließlich das mit einem Wasserzeichen angereicherte Audiosignal wieder zu erhalten. Der SCS-Algorithmus besteht darin, eine Dither-Quantisierung der Spektralwertpegel durchzuführen.

Der SCS-Algorithmus wird ferner dahingehend angepaßt, daß Eigenschaften des menschlichen Gehörs berücksichtigt werden, um eine psychoakustische Gewichtung des SCS-Algorithmus zu erreichen.

In der Fachveröffentlichung "A New Surround-Stereo-Coding Technique, W. Ten Kate, L. Van De Kerkhof und F. Zijderveld, Journal Audio Engineering Society, Bd. 40, Nr. 5, Mai 1992, Seiten 376 bis 382 offenbart ebenfalls das Hinzufügen von unhörbaren Informationen zu Audiosignalen. Im einzelnen wird ein Audiosignal mittels einer Filterbank gefiltert, und dann abwärts-gesampelt. Im einzelnen werden die in jedem Subband vorliegenden Abtastwerte in aufeinanderfolgende Zeitfenster gruppiert. Dann wird von jedem Block das Leistungsspektrum berechnet, das dann dazu verwendet wird, um die Maskierungsschwelle zu berechnen. Die psychoakustische Markierungsschwelle bestimmt die maximal zulässige Leistung eines Signals, das hinzugefügt werden soll. Dieser Wert wird Subband-weise bestimmt. Hierauf werden die einzufügenden Daten unter Verwendung dieser berechneten Maskierungsschwelle gewichtet und den einzelnen Subbändern hinzu addiert, woraufhin ein Upsampling-Filter verwendet wird, dem eine Filterbank nachgeschaltet ist, um schließlich das Audiosignal zu erhalten, das die eingebetteten Informationen umfaßt.

Die Fachveröffentlichung "A High Rate Buried Data Channel for Audio CD", M. Gerzon, AES Preprint 3551, 94. AES Convention, 16. bis 19. März 1993, Berlin, offenbart eine Technik zum Einbetten eines Kanals mit hoher Datenrate mit bis zu 360 kBit pro Sekunde oder darüber in eine Audio-CD ohne wesentliche Beeinträchtigung der CD-Qualität. Der neue Datenkanal kann dazu verwendet werden, um hochqualitative Daten-reduzierte verwandte Audiokanäle aufzunehmen, oder sogar um datenkomprimierte Video- oder Computerdaten aufzunehmen, während gleichzeitig die Kompatibilität mit existierenden Audio-CD-Wiedergabegeräten beibehalten wird. Im einzelnen wird eine Anzahl (bis zu 4 pro Kanal) der niederstwertigen Bits der Audiowörter durch andere Daten ersetzt. Ferner werden psychoakustische Rauschformtechniken, die einem rauschmäßig geformten subtraktiven Dither zugeordnet sind, verwendet, um die Hörbarkeit des resultierenden hinzugefügten Rauschens auf einen subjektiv wahrnehmbaren Pegel zu reduzieren, der gleich dem Rauschpegel einer herkömmlichen CD ist. Im einzelnen wird ein pseudozufälliger Codier/Decodier-Prozeß verwendet, der nur auf den LSB-Datenstrom der Audio-Samples wirkt, ohne daß zusätzliche Synchronisiersignale verwendet werden, um die hinzugefügten LSB-Daten, die die eingebrachten Informationen tragen, zu randomisieren. Dies Randomisierung kann aufgrund der Tatsache, daß sie auf einer Pseudozufallsfolge basiert, unter Verwendung dieser Pseudozufallsfolge im Extraktor rückgängig gemacht werden.

Die Fachveröffentlichung "Lossless Data Hiding Based on Integer Wavelet Transform", G. Xuan u.a., IEEE Workshop, Dezember 2002, St. Thomas, Virgin Islands, S. 1-4, offenbart einen Dateneinbettungsalgorithmus, der eine hohe Datenrate ermöglicht, und der auf einer Ganzzahl-Wavelet-Transformation beruht, die in der Lage ist, das ursprüngliche Bild aus dem Bild mit den eingebetteten Daten wiederzugewinnen. Die Markierung wird ferner vorgenommen, derart, daß keine sichtbaren Störungen aufgrund der eingebrachten Daten stattfindet. Hierzu wird das ursprüngliche Bild nach einer Vorverarbeitung einer Ganzzahl-Wavelet-Transformation unterzogen, um Wavelet-Koeffizienten zu erhalten. Die Ganzzahl-Wavelet-Transformation ist in JPEG 2000 aufgenommen worden. Diese Technik basiert auf der Anwendung von Lifting-Schemen. Die Technik beruht darauf, daß Bits in einer Bitebene der Wavelet-Koeffizienten komprimiert werden, so daß Platz bleibt, um Daten in den durch die Komprimierung der Bitebenen freigemachten Platz zu schreiben. Hierzu wird aus den ursprünglichen Wavelet-Koeffizienten zur Kompression eine komprimierte Wavelet-Koeffizientendarstellung erzeugt, die weniger Bits benötigt als die ursprüngliche Wavelet-Koeffizientendarstellung, wobei die Differenz der Bits für die ursprüngliche Darstellung und der Bits der komprimierten Darstellung dazu verwendet wird, um zu versteckende Daten einzubringen. Dann wird eine inverse Ganzzahl-Wavelet-Transformation vorgenommen, um schließlich das markierte Bild zu erhalten. In den ausgewählten Bitebenen wird insbesondere zur Komprimierung die arithmetische Codierung eingesetzt, um binäre Nullen und Einsen verlustlos zu komprimieren.

Wie es ausgeführt worden ist, ist für die Verfahren zum Einbettung von Daten in Audiosignalen ein Kompromiß anzustreben zwischen Unhörbarkeit, Robustheit und hoher Datenrate. Für Fälle, in denen Robustheit nicht so sehr gefragt ist, sondern vielmehr eine hohe Datenrate, nämlich dann, wenn z. B. lediglich eine drahtgebundene Übertragung oder eine Weitergabe des Stücks auf Tonträger stattfindet, wenn also keine Freiraumübertragung stattfindet, kann zugunsten der hohen Datenrate im Hinblick auf die Robustheit ein Kompromiß eingegangen werden. Dasselbe trifft zu für Anwendungen, bei denen die eingebetteten Informationen nicht zum Schutz vor unerlaubter Vervielfältigung etc. gedacht sind, sondern dafür, beispielsweise einem Audiosignal zusätzliche Informationen hinzuzufügen, die nicht dafür gedacht sind, eine unerlaubte Weitergabe zu verfolgen, sondern die dafür gedacht sind, um den Konsumenten des Audiosignals weitere Informationen bzw. Daten als zusätzliche Dienstleistung zu liefern.

Des weiteren besteht ferner der Bedarf nach einem Konzept, das in der Implementierung einfach und auch im Hinblick auf die Rechenzeitanforderungen zumindest auf Decodiererseite bescheiden ist. Insbesondere wird oftmals der Decodierer in den Händen der Kunden sein, und wird aufgrund der Tatsache, daß er sich im Hinblick auf den Preis am Markt behaupten muß, typischerweise keine besonders hohen Rechen- und Speicherressourcen zur Verfügung stellen.

Die Fachveröffentlichung "High Capacity Reversible Data Embedding and Content Authentication", J. Tian, ICASSP 2003, Seiten III-517 bis III-519, 6. bis 10. April 2003, offenbart einen reversiblen Dateneinbettungsalgorithmus mit hoher Einbettungskapazität. Durch Modifizieren von Pixelwerten eines digitalen Bildes wird eine Nutzlast in das Bild eingebettet. Hierzu wird eine reversible Ganzzahl-Transformation eingesetzt, die auch als Haar-Wavelet- oder S-Transformation bekannt ist. Die Beträge der Differenzwerte, wie sie von dieser Transformation erhalten werden, werden zur Einbettung verwendet.

Die Fachveröffentlichung "Reversible Watermarking by Difference Expansion", J. Tian, Multimedia and Security Workshop at ACM Multimedia 02, 6. Dezember 2002, offenbart eine Technik zur reversiblen Einbettung von Nutzinformationen in ein digitales Bild, die ähnlich der Technik ausgebildet ist, die in der vorstehenden Fachveröffentlichung dargelegt ist.

Die Aufgabe der vorliegenden Erfindung besteht darin, ein effizientes Konzept zum Einbetten von binären Nutzinformationen in Trägersignale zu schaffen.

Diese Aufgabe wird durch eine Vorrichtung gemäß Patentanspruch 1, ein Verfahren zum Einbetten gemäß Patentanspruch 17, eine Vorrichtung zum Extrahieren gemäß Patentanspruch 18, ein Verfahren zum Extrahieren gemäß Patentanspruch 28 oder ein Computer-Programm gemäß Patentanspruch 29 gelöst.

Der vorliegenden Erfindung liegt die Erkenntnis zugrunde, daß ein zeitdiskretes Signal, das nachfolgend auch als Trägersignal bezeichnet wird, dahingehend günstig aufbereitet werden kann, um Informationen zu erhalten, wenn das Signal mittels eines Ganzzahl-Transformationsalgorithmus in eine spektrale Darstellung transformiert wird, wobei die spektrale Darstellung ganzzahlige binäre Spektraldarstellungswerte umfaßt. Hierzu kann ein beliebiger Ganzzahl-Transformationsalgorithmus eingesetzt werden, wie beispielsweise eine Ganzzahl-Wavelet-Transformation oder eine Ganzzahl-MDCT, welche in der Technik auch als IntMDCT (IntMDCT = Integer modifizierte diskrete Cosinustransformation) bekannt ist. Eine für die vorliegende Erfindung geeignete Ganzzahl-Transformation liefert aus binären diskreten Werten ganzzahlige binäre Spektraldarstellungswerte, die unter Verwendung des entsprechenden RückTransformationsalgorithmus wieder in den Zeitbereich transformiert werden können, so daß wieder ganzzahlige binäre zeitdiskrete Werte entstehen.

Die Hin-Ganzzahl-Transformation und die Rück-Ganzzahl-Transformation haben somit die Eigenschaft, daß sie verlustlos arbeiten, also ohne Rundungsfehler. Auf dieser Eigenschaft wird erfindungsgemäß dahingehend aufgebaut, daß die in das Trägersignal einzubringenden Informationen im Spektralbereich eingebracht werden, indem niederwertige Bits der Spektraldarstellungswerte verwendet werden, um die Informationen einzubringen, also gemäß den Informationen gesetzt bzw. nicht gesetzt zu werden.

Hierzu ist erfindungsgemäß eine Einrichtung zum Bestimmen einer Signal-Grenzwertigkeit für einen Spektraldarstellungswert vorgesehen, die eine Signal-Grenzwertigkeit (für einen Informations-Extraktor) reproduzierbar festlegt. Damit das Trägersignal nicht zu stark durch die einzubringenden Informationen "verzerrt" wird, liegt die Spektral-Grenzwertigkeit für einen Spektraldarstellungswert zumindest um eine Wertigkeitsstufe im Hinblick auf die binäre Darstellung unterhalb der Wertigkeit des führenden Bits des betrachteten Spektraldarstellungswerts. Vorzugsweise ist der Abstand der Signal-Grenzwertigkeit von der Wertigkeit des führenden Bits eines Spektraldarstellungswerts so bestimmt, daß, wenn das Trägersignal ein Audiosignal ist, die durch die eingebrachten Informationen eingeführte Störenergie unterhalb der psychoakustischen Maskierungsschwelle ist. Für andere Spektraldarstellungswerte in dem Satz von ganzzahligen binären Spektraldarstellungswerten kann die Signal-Grenzwertigkeit durchaus auch oberhalb des führenden Bits liegen, nämlich dann, wenn der Spektraldarstellungswert ohnehin aufgrund psychoakustischer Effekte, wie beispielsweise einer Vorverdeckung oder einer Nachverdeckung etc. "wegmaskiert" wird.

Je nach Ausführungsbeispiel wird ein mehr oder weniger komplexes Modell zur Bestimmung der Signal-Grenzwertigkeit verwendet, wobei das einfachste Modell, bei dem noch Kompromisse hinsichtlich der Datenrate eingegangen werden müssen, einfach dahingehend besteht, daß die Signal-Grenzwertigkeit immer eine vorbestimmte Anzahl von Wertigkeitsstufen unterhalb der Wertigkeit des führenden Bits des betrachteten Spektral-Darstellungswerts ist. Diese Vorgehensweise hat zwar den Nachteil einer geringeren Datenrate, hat jedoch den Vorteil, daß die Signal-Grenzwertigkeit beim Einbetten der Nutzinformationen in das Trägersignal ermittelbar ist, und daß auch ein Nutzinformationen-Extraktor ohne Übertragung von Seiteninformationen bzw. ohne weitere Berechnungen für jeden Spektraldarstellungswert die Signal-Grenzwertigkeit bestimmen kann.

Fortgeschrittenere Maßnahmen zur Bestimmung der Signal-Grenzwertigkeit bestehen darin, die psychoakustische Maskierungsschwelle entweder auf der Basis des Trägersignals selbst oder auf der Basis des transformierten Trägersignals, also des Satzes von ganzzahligen binären Spektraldarstellungswerten, die eine Folge von Werten des Trägersignals wiederspiegeln, zu berechnen. In diesem Fall wird eine entsprechende Berechnung im Extraktor durchgeführt, um wieder - ohne Übertragung von Seiteninformationen - die Signal-Grenzwertigkeit für die Spektraldarstellungswerte zu ermitteln, in denen Informationen eingebracht sind.

Erfindungsgemäß wird somit für jeden Spektraldarstellungswert eine bestimmte Anzahl von Bits bestimmt, die dafür verwendet werden können, Informationen einzufügen. Das Informationseinfügen geschieht dadurch, daß ein Bitstrom, der Nutzinformationen darstellt, dazu verwendet wird, um entsprechende Bits der Spektraldarstellungswerte, deren Wertigkeit kleiner oder gleich der Signal-Grenzwertigkeit ist, zu setzen bzw. nicht zu setzen. Nachdem die Spektraldarstellungswerte eines Satzes von Ganzzahl-Spektraldarstellungswerten mit Nutzinformationen "angereichert" worden sind, wird ein inverser Ganzzahl-Transformationsalgorithmus verwendet, um wieder eine Folge von zeitdiskreten Werten zu erzeugen. Der Rückwärts-Ganzzahl-Transformationsalgorithmus ist so auf den Vorwärts-Ganzzahl-Transformationsalgorithmus abgestimmt, daß die Rücktransformation wiederum verlustlos, also ohne Rundungsfehler stattfindet. Aus Effizienzgründen und insbesondere aufgrund der besonderen Geeignetheit der IntMDCT wird diese bevorzugt, da sie die Eigenschaft aufweist, ohne Rundungsfehler eine Vorwärts- und eine RückwärtsTransformation zu bewerkstelligen.

Die vorliegende Erfindung ist dahingehend vorteilhaft, daß sie eine Einbettung von Nutzinformationen in ein zeitdiskretes Trägersignal mit hoher Datenrate erlaubt. Daher kann, wenn die vorliegende Erfindung auf Audio-CDs angewendet wird, oder auf z. B. über das Internet übertragene CDkompatible Audiodaten angewendet wird, dazu verwendet werden, beliebige Nutzinformationen den Audiodaten einzuprägen, ohne daß diese für einen Hörer hörbar sind, wie beispielsweise eine komprimierte Version des Audiosignals selbst, oder Zusatzdaten in Form von z. B. JPEGkomprimierten Bilddaten, welche beispielsweise ein Photo des Interpreten etc. darstellen. Natürlich kann erfindungsgemäß auch beispielsweise der Liedtext oder beliebige andere Zusatzinformationen einem Trägersignal eingeprägt werden.

Ein weiterer Vorteil des erfindungsgemäßen Konzepts besteht ferner darin, daß das Format des Trägersignals, also beispielsweise ein CD-kompatibles Format für Audiodaten durch die erfindungsgemäße Einbettung von Informationen nicht angetastet wird. Damit ist sowohl das ursprüngliche Trägersignal vor der Einbettung von Informationen als auch das vom Einbetter ausgegebene Trägersignal mit eingebetteten Informationen für ein Wiedergabegerät kompatibel, beispielsweise für einen CD-Player oder DVD-Player.

Ein weiterer Vorteil der vorliegenden Erfindung besteht darin, daß Aufwand und Nutzdatenrate miteinander skalierbar sind, dahingehend, daß die Datenrate durch ausgefeiltere Maßnahmen zum Berechnen der Maskierungsschwelle dort eingesetzt werden können, wo höhere Daten benötigt werden, während einfache Maßnahmen zur Bestimmung der Signal-Grenzwertigkeit eines Spektraldatenwerts wiederum dort eingesetzt werden können, wo die Datenrate nicht entscheidend ist, wo jedoch eher die Kosten des Endprodukts in Form eines Decodierers mit integriertem Nutzinformationen-Extraktor entscheidend sind.

An dieser Stelle sei darauf hingewiesen, daß Decodierer die Produkte des Codier/Decodier-Systems sind, die in hohen Stückzahlen ausgegeben werden, und daher, um sich am Markt durchzusetzen, preisgünstig sein müssen. Hierbei kommt insbesondere dazu, daß typischerweise das Ziel sogar dahingehend besteht, daß die Decodierer kostenlos oder nur für einen symbolischen Preis verteilt werden, damit sich ein neuer Codier/Decodier-Standard durchsetzt, und daß dann die Kosten für die Entwicklung des Decodierers eher über die entsprechend codierten Daten, also Musik, Video, etc. "hereingeholt" werden sollen. Insbesondere in einem solchen Szenario ist es von entscheidender Bedeutung, daß die Decodierer, zumindest in einer "abgespeckten" Version (mit mittelhoher Datenrate), also mit einem bezüglich Rechenzeit und Speicher unaufwendigen Algorithmus zur Bestimmung der Signal-Grenzwertigkeit ausgerüstet werden können, um Decodierer sehr preisgünstig herstellen zu können.

Das erfindungsgemäße Konzept ist somit dahingehend vorteilhaft, daß es auch versionsmäßig kompatibel ist, dahingehend, daß z. B. eine Basisversion mit nicht zu hoher Datenrate sogar kostenlos verteilt werden kann, und daß dann, zum Erreichen einer höheren Datenrate, Upgrades geliefert werden können, bei denen die Signal-Grenzwertigkeit aufwendiger berechnet wird, um eine höhere Datenrate zu erlauben, wobei für solche Upgrades dann ein Preis verlangt werden kann, den ein Kunde auch bereit ist zu zahlen, da er bereits die Vorteile der "Basisversion" kennen gelernt hat.

Ein weiterer Vorteil der vorliegenden Erfindung besteht darin, daß auf bestehende Module beispielsweise zur Berechnung der psychoakustischen Maskierungsschwelle oder für die Hin- und Rück-Transformation zurückgegriffen werden kann, und daß die neuen Module, wie beispielsweise die Einrichtung zum Bestimmen der Signal-Grenzwertigkeit oder die Einrichtung zum Einstellen der Bits gemäß den Nutzinformationen sehr einfach implementierbar sind, dahingehend, daß auch der Entwicklungs- und Testaufwand aufgrund des erfindungsgemäßen Konzepts in Grenzen bleiben wird.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Blockschaltbild einer erfindungsgemäßen Vorrichtung zum Einbetten von Nutzinformationen in ein Trägersignal;

Fig. 2 ein Blockschaltbild einer erfindungsgemäßen Vorrichtung zum Extrahieren der Nutzinformationen aus einem modifizierten Trägersignal;

Fig. 3 eine schematische Darstellung mehrere Spektraldarstellungswerte geordnet nach Wertigkeit zur Veranschaulichung der Ermittlung der Signal-Grenzwertigkeit bei einem ersten Ausführungsbeispiel der vorliegenden Erfindung;

Fig. 4 ein Diagramm wie in Fig. 3, jedoch zur Veranschaulichung einer zusätzlichen Maßnahme zur Erhöhung der Datenrate durch Einführung einer Mithörschwelle;

Fig. 5 ein Anwendungsszenario für das erfindungsgemäße Konzept am Beispiel eines Audiosignals als Trägersignal;

Fig. 6 ein Anwendungsszenario für einen erfindungsgemäßen Extraktor am Beispiel eines Audiosignals als Trägersignal;

Fig. 7a ein schematisches Blockschaltbild eines bekannten Codierers mit MDCT und 50-Prozent-Überlappung;

Fig. 7b ein Blockschaltbild eines bekannten Decodierers zum Decodieren der durch Fig. 7a erzeugten Werte;

Fig. 8 ein Blockschaltbild einer bevorzugten Einrichtung zum Verarbeiten von zeitdiskreten Audioabtastwerten, um ganzzahlige Werte zu erhalten, aus denen ganzzahlige Spektralwerte mittelbar sind;

Fig. 9 eine schematische Darstellung der Zerlegung einer MDCT und einer inversen MDCT in Givens-Rotationen und zwei DCT-IV-Operationen; und

Fig. 10    eine Darstellung zur Veranschaulichung der Zerlegung der MDCT mit 50-Prozent-Überlappung in Rotationen und DCT-IV-Operationen.

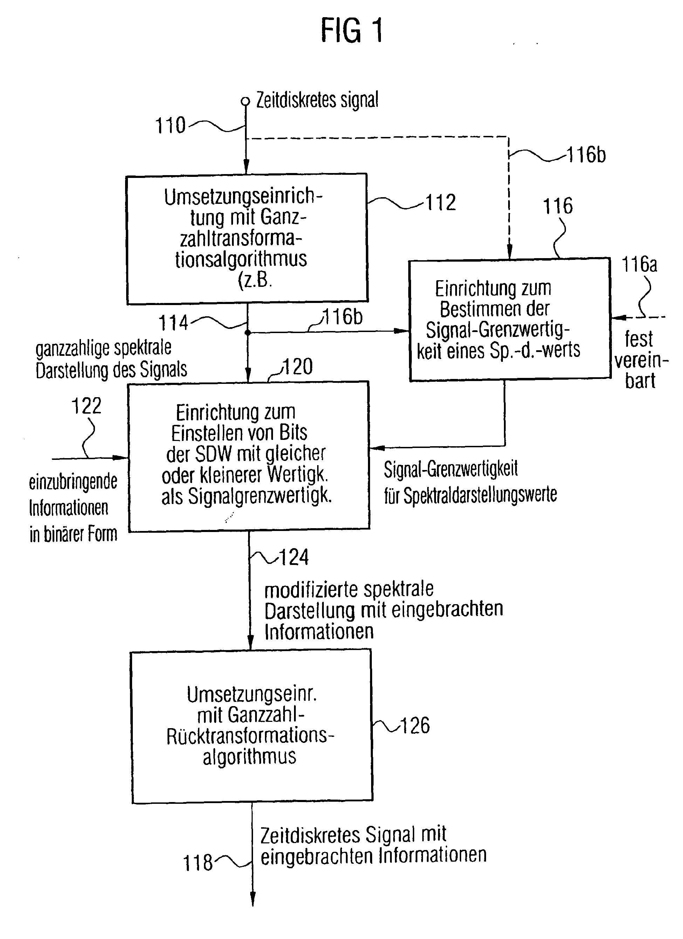

Fig. 1 zeigt eine erfindungsgemäße Vorrichtung zum Einbetten von binären Nutzinformationen in ein Trägersignal, das eine erste Folge von binären diskreten Werten aufweist. Das zeitdiskrete Trägersignal wird über einen Eingang 110 der in Fig. 1 gezeigten Vorrichtung zugeführt. Eine Einrichtung 112 zum Umsetzen ist vorzugsweise ausgebildet, um das zeitdiskrete Signal durch entsprechende Fensterung vorzugsweise in 50%-iger Überlappung in Folgen mit einer bestimmten Anzahl von Werten zu gruppieren und in eine spektrale Darstellung umzusetzen. Die Einrichtung 112 ist ausgebildet, um einen Vorwärts-Ganzzahl-Transformationsalgorithmus, der vorzugsweise der Int-MDCT-Algorithmus ist, zu verwenden. Aufgrund des Vorwärts-Ganzzahl-Transformationsalgorithmus wird ein Satz von ganzzahligen binären Spektraldarstellungswerten an einem Ausgang 114 der Umsetzungseinrichtung 112 bereitgestellt. Die Umsetzungseinrichtung 112 liefert somit Spektraldarstellungswerte. Ein Spektraldarstellungswert ist in binärer Form ausgebildet und umfaßt Bits, wobei jedem Bit des Spektraldarstellungswerts eine andere binäre Wertigkeit zugeordnet ist. Binäre Wertigkeiten sind beispielsweise $2^0$, $2^1$, $2^2$, $2^3$, $2^4$, ..., $2^i$, ..., $2^n$. Das Bit mit der Wertigkeit $2^0$ wird als niederstwertiges Bit (LSB) bezeichnet, während das Bit mit der Wertigkeit $2^n$ als höchstwertiges Bit (MSB) bezeichnet wird. Ferner wird nicht jeder Spektraldarstellungswert derart groß sein, daß bei ihm das MSB gesetzt ist. Insofern umfaßt jeder Spektraldarstellungswert ein gesetztes Bit mit einer höchsten Wertigkeit in den Bits des Spektraldarstellungswerts. Dieses Bit, das beispielsweise das Bit mit der Wertigkeit $2^i$ ist, wird als führendes Bit des Spektraldarstellungswerts bezeichnet und hat eine höhere Wertigkeit als alle anderen aussagekräftigen Bit des Spektraldarstellungswerts, die nämlich eine niedrigere Wertigkeit haben, die sich von der Wertigkeit i-1 bis zur Wertigkeit 0, also dem LSB, erstreckt.

Die erfindungsgemäße Vorrichtung umfaßt ferner eine Einrichtung 116 zum Bestimmen einer Signal-Grenzwertigkeit eines Spektraldarstellungswerts. Je nach Ausführungsform kann die Signal-Grenzwertigkeit eines Spektraldarstellungswerts auf verschiedene Arten und Weisen bestimmt werden. Damit der Informationsgehalt des Trägersignals durch die einzubringenden binären Nutzinformationen nicht zu sehr oder überhaupt verzerrt wird, wird die Signal-Grenzwertigkeit zumindest für einen Spektraldarstellungswert in der Gruppe von Spektraldarstellungswerten um eine Wertigkeitsstufe unterhalb der Wertigkeit des führenden Bits dieses Spektraldarstellungswerts sein. Je nach Art des Trägersignals kann es jedoch durchaus vorkommen, daß für andere Spektraldarstellungswerte die Signal-Grenzwertigkeit gleich der Wertigkeit des führenden Bits oder sogar über der Wertigkeit des führenden Bits eines weiteren Spektraldarstellungswerts liegt, wie es nachfolgend dargelegt wird. Die einfachste Art und Weise zur Bestimmung der Signalgrenzwertigkeit besteht darin, daß die Einrichtung 116 auf der Basis eines fest vereinbarten Abstands zur Wertigkeit des führenden Bits des betrachteten Spektraldarstellungswerts arbeitet, wie es durch einen Steuereingang 116a dargestellt ist, über den dieser fest vereinbarte Abstand der Einrichtung 116 zugeführt werden kann.

Wenn das Trägersignal ein Audiosignal ist, so dürfte bereits eine fest vereinbarte Wertigkeitsdifferenz von 3 genügen, daß die in das Trägersignal eingebrachten Nutzinformationen unhörbar sind, so daß an einem Ausgang 118 der Einbettungsvorrichtung erhaltene modifizierte zeitdiskrete Signal mit eingebrachten Informationen psychoakustisch transparent ist, daß also das modifizierte Signal von einem menschlichen Hörer nicht oder nur kaum von dem ursprünglichen Signal, das über den Eingang eingeben worden ist, unterschieden werden kann. Ein Wertigkeitsabstand der Spektraldarstellungswerte von 3 bedeutet, daß die Energie der Nutzinformationen, die in das Trägersignal eingebracht worden sind, für jeden Spektraldarstellungswert um 18 dB geringer sein wird als die Energie des Trägersignals selbst in dem durch den Spektraldarstellungswert beschriebenen Frequenzband.

Alternativ oder zusätzlich kann die Einrichtung zum Bestimmen der Signal-Grenzwertigkeit eines Spektraldarstellungswerts ausgebildet sein, um entweder auf der Basis des im Zeitbereich vorliegenden zeitdiskreten Signals (Leitung 116b) oder auf der Basis des im Frequenzbereich vorliegenden zeitdiskreten Signals (116b) für jeden Spektraldarstellungswert oder für zumindest eine Gruppe von Spektraldarstellungswerten, die vorzugsweise ein kritisches Band beschreiben, die psychoakustische Maskierungsschwelle zu berechnen. Die Signal-Grenzwertigkeit des Spektraldarstellungswerts wird dann gleich der psychoakustischen Maskierungsschwelle gesetzt, wenn die psychoakustische Maskierungsschwelle pro Spektraldarstellungswert bestimmt worden ist. Wurde die psychoakustische Markierungsschwelle jedoch lediglich für ein Band mit mehreren Spektraldarstellungswerten bestimmt, so wird die Signal-Grenzwertigkeit für die Spektraldarstellungswerte zusammen dahingehend bestimmt, daß die gesamte in dieses Band eingebrachte "Störenergie" aufgrund der in das Trägersignal eingebrachten Informationen kleiner oder gleich der psychoakustischen Markierungsschwelle ist.

Werden Videosignale betrachtet, so wird statt der psychoakustischen Maskierungsschwelle die psychooptische Maskierungsschwelle verwendet, die analog im Ortsfrequenzbereich angebbar ist. Insbesondere kann die psychooptische Maskierungsschwelle für jede Farbebene angegeben werden, wenn das Videosignal z. B. Spektralkoeffizienten für drei Basis-Farbebenen umfaßt.

Falls das Trägersignal ein anderes redundantes Informationssignal ist, das von einem Zeitbereich in einen Spektralbereich umsetzbar ist, kann ein entsprechendes anderes Modell verwendet werden, um Signal-Grenzwertigkeiten für Spektraldarstellungswerte so zu bestimmen, daß die in das Trägersignal eingebetteten binären Nutzinformationen nicht oder nur kaum zu einem wahrnehmbaren Informationsverlust des modifizierten Trägersignals führen.

Sowohl der Satz von ganzzahligen binären Spektraldarstellungswerten am Ausgang 114 der Umsetzungseinrichtung als auch die Signal-Grenzwertigkeitsinformationen, die von der Einrichtung 116 ausgegeben werden, werden einer Einrichtung 120 zugeführt, die ausgebildet ist, um Bits der Spektraldarstellungswerte mit gleicher oder kleinerer Wertigkeit als der bestimmten Signalgrenzwertigkeit gemäß den einzubringenden binären Informationen einzustellen, die über einen Nutzinformationseingang 122 der Einrichtung 120 zugeführt werden. Die Einrichtung 120 ist ausgebildet, um die aufeinanderfolgenden Spektraldarstellungswerte in dem Satz von ganzzahligen binären Spektraldarstellungswerten gemäß einem vorbestimmten Muster mit Nutzinformationen zu belegen, wobei der "Belegungs"-Algorithmus vorzugsweise fest vereinbart ist, damit er nicht einem Extraktor z. B. über Seiteninformationen oder über eine extra Signalisierungskanal explizit mitgeteilt werden muß. Vorzugsweise wird darauf geachtet, die Signal-Grenzwertigkeiten sowie den "Belegungs"-Algorithmus derart zu gestalten, daß keine Signalisierungsinformationen erforderlich werden, so daß das zeitdiskrete Signal mit den eingebrachten Informationen am Ausgang der in Fig. 1 gezeigten Vorrichtung dieselben Kompatibilitätseigenschaften hat wie das ursprüngliche am Eingang 110 eingespeiste zeitdiskrete Signal, derart, daß das zeitdiskrete Signal mit eingebrachten Informationen am Ausgang 118, wenn es ein Audiosignal ist, ebenso wie das ursprüngliche zeitdiskrete Signal z. B. für einen CD-Player geeignet ist, von diesem also ohne weiteres abspielbar ist, unabhängig davon, ob der CD-Player nun die eingebetteten Nutzinformationen extrahiert oder nicht.

Die an einem Ausgang 124 der Einrichtung 120 zum Einstellen von Bits anliegenden eingestellten Spektraldarstellungswerte werden nunmehr mit einer weiteren Umsetzungseinrichtung 126 wieder in den Zeitbereich zurücktransformiert, wobei die Umsetzungseinrichtung 126 ausgebildet ist, um einen Ganzzahl-Rücktransformationsalgorithmus durchzuführen, der aus ganzzahligen modifizierten Spektraldarstellungswerten wieder ganzzahlige (modifizierte) zeitdiskrete Werte erzeugt. Der Rücktransformationsalgorithmus, der durch die Einrichtung 126 ausgeführt wird, ist auf den Vorwärts-Ganzzahl-Transformationsalgorithmus, der durch die Einrichtung 112 ausgeführt wird, dahingehend angepaßt, daß durch die Kombination aus Vorwärts-Transformation und RückwärtsTransformation keine Rundungsverluste auftreten, die sonst zu einem Informationsverlust führen würden, da eine Aufrundung oder Abrundung zu einer Änderung von niederen Bits führen würde, in denen jedoch erfindungsgemäß die meisten Informationen eingebracht worden sind.

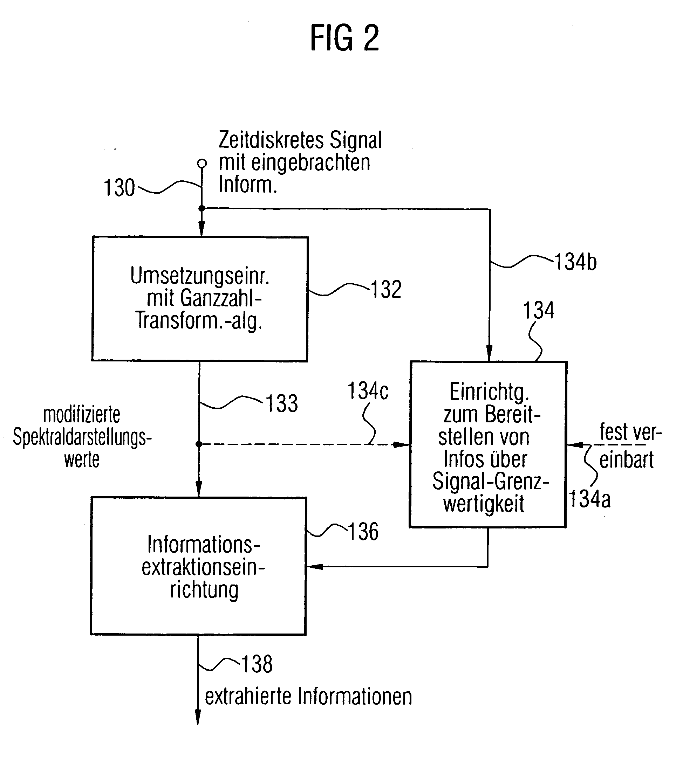

Am Ausgang der Umsetzungseinrichtung 126 liegt somit wieder eine Folge von binären diskreten Werten vor, die zusammen einen zeitlichen Abschnitt des nunmehr modifizierten Trägersignals darstellen. Durch Aneinanderreihen von nach und nach aufgrund der Blockverarbeitung der erfindungsgemäßen Vorrichtung erzeugten Blöcke ergibt sich wieder das nach wie vor für eine ursprünglich gedachte Abspielvorrichtung kompatible modifizierte Trägersignal, aus dem nunmehr durch einen nachfolgend anhand von Fig. 2 beschriebenen Extraktor die binären Nutzinformationen wieder extrahiert werden können.

Fig. 2 zeigt einen erfindungsgemäßen Extraktor mit einem Eingang 130 für ein zeitdiskretes Signal mit eingebrachten Informationen. Die in Fig. 2 gezeigte Vorrichtung ist insbesondere ausgebildet, um Nutzinformationen aus einem modifizierten Trägersignal zu extrahieren, das eine zweite Folge von Abtastwerten aufweist, in die die binären Nutzinformationen eingebettet sind, wobei die Nutzinformationen durch Einstellen von Bits eines Spektraldatenwerts eingebracht sind, der ein Spektraldarstellungswert aus einem Satz von ganzzahligen binären Spektraldarstellungswerten ist, wobei der Spektraldarstellungswert Bits aufweist, wobei jedem Bit des Spektraldarstellungswerts eine andere Wertigkeit zugeordnet ist, wobei ein gesetztes Bit mit einer höchsten Wertigkeit in den Bits des Spektraldarstellungswerts ein führendes Bit des Spektraldarstellungswerts ist, und alle restlichen Bits des Spektraldarstellungswerts eine niedrigere Wertigkeit als das führende Bit haben.

Insbesondere wurde der Satz von ganzzahligen Spektraldarstellungswerten durch Umsetzen einer ersten Folge von diskreten Werten in eine spektrale Darstellung unter Verwendung eines Vorwärts-Ganzzahl-Transformationsalgorithmus erzeugt, der ausgebildet ist, um einen Satz von ganzzahligen binären Spektraldarstellungswerten zu liefern, der aus der ersten Folge von diskreten Werten abgeleitet worden ist. Die eingestellten Bits der Spektraldarstellungswerte sind Bits, deren Wertigkeiten kleiner oder gleich einer Signal-Grenzwertigkeit für den Spektraldarstellungswert sind.

Im einzelnen umfaßt der Extraktor in Fig. 2 eine Einrichtung 132 zum Umsetzen der zweiten Folge von Abtastwerten unter Verwendung eines Hin-Ganzzahl-Transformationsalgorithmus in eine spektrale Darstellung, um einen Extraktionssatz von ganzzahligen binären Spektraldarstellungswerten zu erhalten. Der erfindungsgemäße Extraktor umfaßt ferner eine Einrichtung 134 zum Bereitstellen von Informationen über die Signal-Grenzwertigkeit eines Spektraldarstellungswerts der Gruppe von Spektraldarstellungswerten am Ausgang der Umsetzungseinrichtung 132. Die Einrichtung 134 ist ferner ausgebildet, um auf eine oder mehrere verschiedene Arten und Weisen die Informationen über die Signal-Grenzwertigkeit bereitzustellen. Eine Art und Weise besteht darin, eine fest vereinbarte Signalgrenzwertigkeit zu verwenden, wie es durch einen Eingang 134a dargestellt ist. Alternativ kann die Signal-Grenzwertigkeit für einen Spektraldarstellungswert auch auf der Basis der über den Eingang 130 bereitgestellten Daten bestimmt werden, wie es durch einen Eingang 134b dargestellt ist. Wieder alternativ kann die Einrichtung 134 auch ausgebildet sein um unter Verwendung der modifizierten Spektraldarstellungswerte zu arbeiten, wie es durch einen Eingang 134c dargestellt ist. Die Einrichtung 134 liefert dann die Informationen über Signal-Grenzwertigkeiten für Spektraldarstellungswerte zu einer Informationsextraktionseinrichtung 136, die beispielsweise ausgebildet ist, um alle Bits eines Spektraldarstellungswerts oberhalb der Signal-Grenzwertigkeit zu verwerfen und die verbleibenden Bits von einem Spektraldarstellungswert zum nächsten Spektraldarstellungswert aneinander zu reihen, um wieder einen Strom von extrahierten Nutzinformationen an einem Ausgang 138 zu erhalten.

Erfindungsgemäß erfolgt die Einbettung der Zusatzdaten somit im Frequenzbereich, um vorzugsweise eine unhörbare Modifikation des Trägersignals, das beispielsweise ein Audiosignal ist, aufgrund von psychoakustischen Verdeckungseffekten zu ermöglichen. Zur Darstellung des Audiosignals im Frequenzbereich wird vorzugsweise eine perfekt rekonstruierende Ganzzahl-Transformation verwendet, wie beispielsweise die IntMDCT. Dies ermöglicht eine invertierbare Darstellung der ganzzahligen Audioabtastwerte als ganzzahlige Spektralwerte. Dies hat den Vorteil, daß auch nach der Modifikation des Ganzzahl-Spektrums durch die einzubringenden Nutzinformationen bei der Rücktransformation in den Zeitbereich wieder ganzzahlige Abtastwerte bestehen. Eine zusätzliche verlustbehaftete Rundung auf ganzzahlige Abtastwerte ist erfindungsgemäß nicht erforderlich und auch nicht erwünscht, da dies zu einem Informationsverlust führen könnte. Somit läßt sich das modifizierte Ganzzahl-Spektrum auch nach der Rücktransformation in den (quantisierten) Zeitbereich wieder exakt rekonstruieren.

Als einfachste Variante für das Einbettungskonzept, also für die Funktionalität der Einrichtung 116 von Fig. 1 und der Einrichtung 120 von Fig. 1 wird eine konstante Blocklänge der Umsetzungseinrichtung 112, die vorzugsweise die IntMDCT ausführt, angenommen. So wird beispielsweise eine Blocklänge von 256 Spektrallinien vorgesehen. Der Satz von ganzzahligen binären Spektraldarstellungswerten umfaßt somit 256 Spektrallinien. Dies stellt einen Kompromiß zwischen guter Frequenzauflösung für tonale Signale und guter Zeitauflösung für transiente Signale dar.

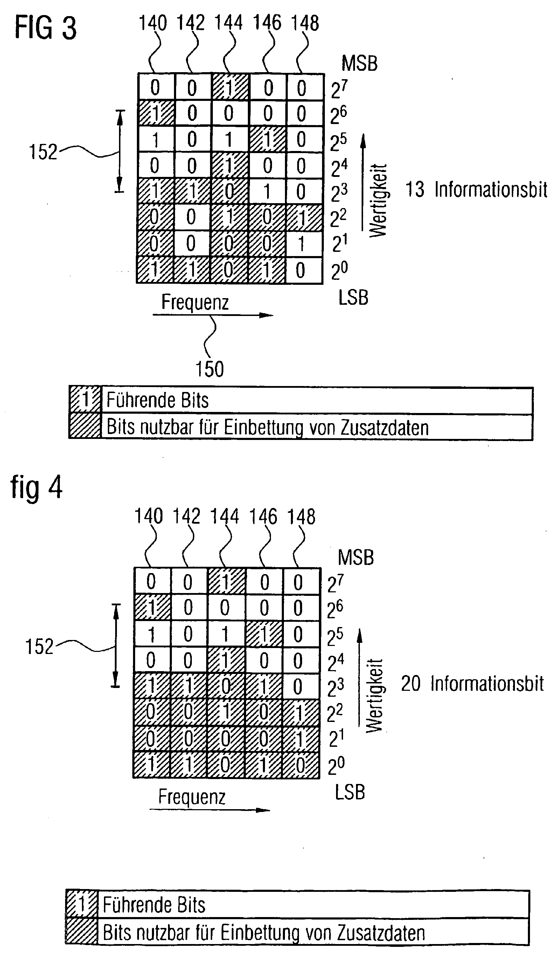

Weiterhin wird, wie es ausgeführt worden ist, die fest vereinbarte Variante der Einrichtung 116 zum Bestimmen der Signal-Grenzwertigkeit verwendet. Damit wird für jede Spektrallinie, also für jeden Spektraldarstellungswert eine fester Signal-Rausch-Abstand eingestellt, der ausreichend ist, um eine transparente Audioqualität beizubehalten. Es wird ein Absolutwert eines Spektraldarstellungswerts in der Binärdarstellung betrachtet. Aufgrund der psychoakustischen Verdeckungseffekte wird ferner angenommen, daß eine bestimmte Anzahl von Bits unterhalb des höchsten Bits ungleich 0, also des führenden Bits, für eine transparente Audioqualität nötig ist. Für einen Signal-Rausch-Abstand von 18 dB beispielsweise sind drei Bits nötig. Dies bedeutet, daß bei diesem Konzept sowohl das führende Bit als auch die zwei Bits mit unmittelbar darunterliegender Wertigkeit nicht für eine Nutzinformationeneinbettung zur Verfügung stehen. Dafür können alle Bits mit einer Wertigkeit die mindestens um 3 niedriger ist als die Wertigkeit des führenden Bits ohne Bedenken hinsichtlich einer letztendlich entstehenden Verzerrung zur Einbettung der Nutzinformationen verwendet werden. Hat eine Spektrallinie beispielsweise das führende Bit an der Stelle 8, so können in diesem Beispiel fünf Bits für die Einbettung der Zusatzdaten verwendet werden. Dies wird nachfolgend anhand der Fig. 3 und 4 für zwei verschiedene Varianten dargestellt.

Fig. 3 zeigt ein Diagramm von fünf erhaltenen Spektraldarstellungswerten 140-148, die Frequenzen in aufsteigender Reihenfolge darstellen, wie es durch einen Frequenzpfeil 150 in Fig. 3 angedeutet ist. In Fig. 3 wird angenommen, daß jeder Spektraldarstellungswert eine 8-Bit-Zahl ist. Die Wertigkeit des führenden Bits des Spektraldarstellungswerts 140 beträgt 6. die Wertigkeit des führenden Bits des Spektraldarstellungswerts 142 beträgt 3. Dagegen beträgt die Wertigkeit des führenden Bits des Spektraldarstellungswerts 144 7, während die Wertigkeit des Spektraldarstellungswerts 146 bei 5 liegt und die Wertigkeit des Spektraldarstellungswerts 148 bei 2 liegt.

In Fig. 3 ist ferner der fest vereinbarte Signal-Grenzwertigkeits-Modus dargestellt, dahingehend, daß die Signal-Grenzwertigkeit einen Abstand von drei Wertigkeitsstufen zum führenden Bit des entsprechenden Spektraldarstellungswerts hat. Die Signal-Grenzwertigkeit für den Spektraldarstellungswert 140 beträgt 3, während die Spektral-Grenzwertigkeit für den Spektraldarstellungswert 140 0 beträgt. Dagegen beträgt die Signal-Grenzwertigkeit für den Spektraldarstellungswert 144 gleich 4. Der Spektraldarstellungswert 146 hat eine Signal-Grenzwertigkeit von 2, während der Spektral-Darstellungswert 148 keine Signal-Grenzwertigkeit hat, da dieser Wert ein führendes Bit mit einer Wertigkeit lediglich gleich 2 hat, was bedeutet, daß in den Spektraldarstellungswert 148 keine Nutzinformationen eingebettet werden können, damit nicht die Transparenz des Signals beeinträchtigt wird. Die Information, die über den Eingang 134a in den Extraktor bzw. über den Eingang 116a in den Einbetter eingespeist wird, beträgt hierbei 3 Wertigkeitsstufen, wie es durch einen Doppelpfeil 152 in Fig. 3 skizziert ist.

Die Einrichtung 120 zum Einstellen von Fig. 1 ist somit wirksam, bei dem in Fig. 3 gezeigten Ausführungsbeispiel sämtliche Bits gleich der Signal-Grenzwertigkeit der Gruppe von Spektraldarstellungswerten sowie sämtliche Bits mit einer niedrigeren Wertigkeit als der Signal-Grenzwertigkeit gemäß den Nutzinformationen einzustellen. Die Folge von in Fig. 3 eingestellten Nutzinformationen würde daher 1001, 1, 10100, 001 lauten. Ein Decodierer für die Nutzinformationen würde diese Bits dann beispielsweise als Bits eines Datenstroms interpretieren, der Verbindung mit mehreren Blöcken von Spektraldarstellungswerten zusammen ein Audiosignal, ein Videosignal, einen Text oder etwas ähnliches darstellt.

Es wird darauf hingewiesen, daß diese in Fig. 3 beschriebene einfache Variante des erfindungsgemäßen Konzepts auf einem signalunabhängigen psychoakustischen Modell basiert, das beispielsweise für jede Spektrallinie einen Abstand 152 von drei Wertigkeitsstufen bzw. drei Bits fordert.

Bei einem bevorzugten Ausführungsbeispiel der vorliegenden Erfindung wird jedoch ein Signal-angepaßtes psychoakustisches Modell verwendet. Hierzu ist zu beachten, daß die Zahl der psychoakustisch signifikanten Bits für jede Spektrallinie auch nach der Modifikation der nicht-signifikanten Bits durch die Signaleinbettung genauso durch einen Extraktor berechnet werden kann, damit keine parallelen Seiteninformationen übermittelt werden müssen. Dies läßt sich beispielsweise dadurch erreichen, daß für die Berechnung des psychoakustischen Modells nur die führenden Bits jedes Spektralwerts verwendet werden, und daß bei der Einbettung zumindest die führenden Bits nicht verändert werden, obgleich dies aufgrund des psychoakustischen Modells möglich wäre. Für kleinere, stark maskierte Spektralwerte lassen sich damit mehr Bits zur Einbettung der Zusatzdaten nutzen, wie es nachfolgend anhand von Fig. 4 gezeigt wird.

Es sei darauf hingewiesen, daß die Verwendung lediglich der führenden Bits eines Spektraldarstellungswerts zur Berechnung der psychoakustischen Maskierungsschwelle bedeutet, daß jeder Spektraldarstellungswert, der für die psychoakustische Maskierungsschwelle zugrunde gelegt wird, eine abgerundete Version des tatsächlichen Spektraldarstellungswerts ist. Nachdem psychoakustische Maskierungseffekte jedoch mit zunehmender Leistung in einem Spektraldarstellungswert, also mit zunehmender Amplitude eines Spektraldarstellungswerts zunehmen, ist die Verwendung von abgerundeten Spektraldarstellungswerten dahingehend günstig, daß zwar vielleicht für den einen oder anderen Spektraldarstellungswert eine geringere Menge an eingebetteten Nutzinformationen bereitgestellt wird, daß jedoch auf jeden Fall die psychoakustische Transparenz sichergestellt wird. Dies bedeutet im einzelnen, daß die aufgrund einer Gruppe von abgerundeten Spektraldarstellungswerten berechnete Maskierungsschwelle auf jeden Fall geringer ist als die Maskierungsschwelle die das nicht abgerundete Spektrum haben würde.

Ein Vergleich von Fig. 3 und Fig. 4 fördert zutage, daß bei dem gewählten Beispiel der Spektraldarstellungswert 142 vollständig durch die beiden benachbarten großen Spektraldarstellungswerte 140 und 144 wegmaskiert wird, und daß zumindest das Bit mit der Wertigkeit 3 des Spektraldarstellungswerts 146 ebenfalls nicht zum psychoakustischen Gesamteindruck beiträgt und somit ebenfalls wegmaskiert wird. Dasselbe trifft für die untersten drei Bits des Spektraldarstellungswerts 148 zu. Die Nutzinformationen, die in das in Fig. 4 gezeigte Spektrum eingebettet sind, würden daher eine Folge von Nutzinformationen darstellen, die folgendermaßen lautet: 1001, 1001, 10100, 1001, 110.

Ein Vergleich von Fig. 4 und Fig. 3 verdeutlicht ferner, daß durch die einfache fest vereinbarte Version der Einrichtung 116 zum Bestimmen der Signal-Grenzwertigkeit eines Spektralwerts in das Beispielspektrum lediglich 13 Informationsbits eingebettet werden können, während in dem Fall, in dem die Einrichtung 116 auf der Basis eines psychoakustischen Modells arbeitet, bereits 20 Informationsbits eingebracht werden können. Dies zeigt den Skalierbarkeitsvorteil des erfindungsgemäßen Konzepts dahingehend, daß durch zusätzlichen Aufwand bei der Einbettung (und damit auch bei der Extraktion) die Datenrate erheblich erhöht werden kann.

Ferner sei darauf hingewiesen, daß bei dem in Fig. 4 gezeigten Beispiel die Signal-Grenzwertigkeit lediglich der Spektraldarstellungswerte 140 und 144 um den Abstand 152 unterhalb der Wertigkeit des jeweils führenden Bits liegt. Dagegen fällt die Signal-Grenzwertigkeit bei dem Spektraldarstellungswert 142 mit der Wertigkeit des führenden Bits dieses Spektralwerts zusammen, was wiederum bedeutet, daß dieser Spektraldarstellungswert vollständig wegmaskiert wird. Beim Spektraldarstellungswert 146 ist die Signal-Grenzwertigkeit gleich 3 und somit nur um zwei Wertigkeitsstufen niedriger als die Wertigkeit des führenden Bits, die für den Spektraldarstellungswert 146 gleich 5 beträgt. Schließlich ist bei dem Spektraldarstellungswert 148 die Signal-Grenzwertigkeit ebenfalls gleich der Wertigkeit des führenden Bits, also gleich der Wertigkeit 2.

Für sehr leise Audiosignalpassagen kann ferner eine Ruhehörschwelle und damit eine Ruhe-Grenzwertigkeit definiert werden, die unabhängig von dem führenden Bit eines solchen Spektraldarstellungswerts ist, dahingehend, daß z. B. gesagt wird, daß unabhängig von der Wertigkeit des führenden Bits eines Spektraldarstellungswerts die Ruhe-Grenzwertigkeit immer z. B. gleich der Wertigkeit 3 ist. Dies würde bei dem in Fig. 4 gezeigten Beispiel bedeuten, daß auch das Bit mit der Wertigkeit 3 des Spektraldarstellungswerts 148 verwendet werden könnte, um Informationen einzubringen. Damit kann die Ruhe-Grenzwertigkeit eines Spektraldarstellungswerts in einer Gruppe von Spektraldarstellungswerten auch höher als die Wertigkeit des führenden Bits dieses Spektraldatenwerts nach der Umsetzung durch die Einrichtung 112 von Fig. 1 sein. Zur Verhinderung einer sehr geringen Datenrate für Zusatzdaten bei leisen Passagen des Audiosignal wird somit, auch um eine gewisse Mindestdatenrate zu ermöglichen, vorzugsweise die feste Ruhehörschwelle dahingehend angenommen, daß sie eine Grenzwertigkeit definiert, bis zu der auf jeden Fall Informationen eingebracht werden können. Ferner wird es bevorzugt, diese feste Ruhehörschwelle frequenzmäßig zu gestalten, dahingehend, daß sie für unterschiedliche Frequenzen, die durch die unterschiedlichen Spektraldarstellungswerte repräsentiert werden, unterschiedliche Werte annimmt. Die Ruhehörschwelle kann beispielsweise für niedrigere Frequenzen bei geringeren Wertigkeiten liegen als für höhere Frequenzen, was insbesondere für sehr hochfrequente Spektraldarstellungswerte von hoher Bedeutung sein kann, da solche hohen Frequenzen ohnehin nur durch sehr wenige Hörer wahrgenommen werden können. Im Hinblick auf den frequenzabhängigen Verlauf der Ruhehörschwelle wird jedoch auf die einschlägige psychoakustische Grundlagenliteratur verwiesen.

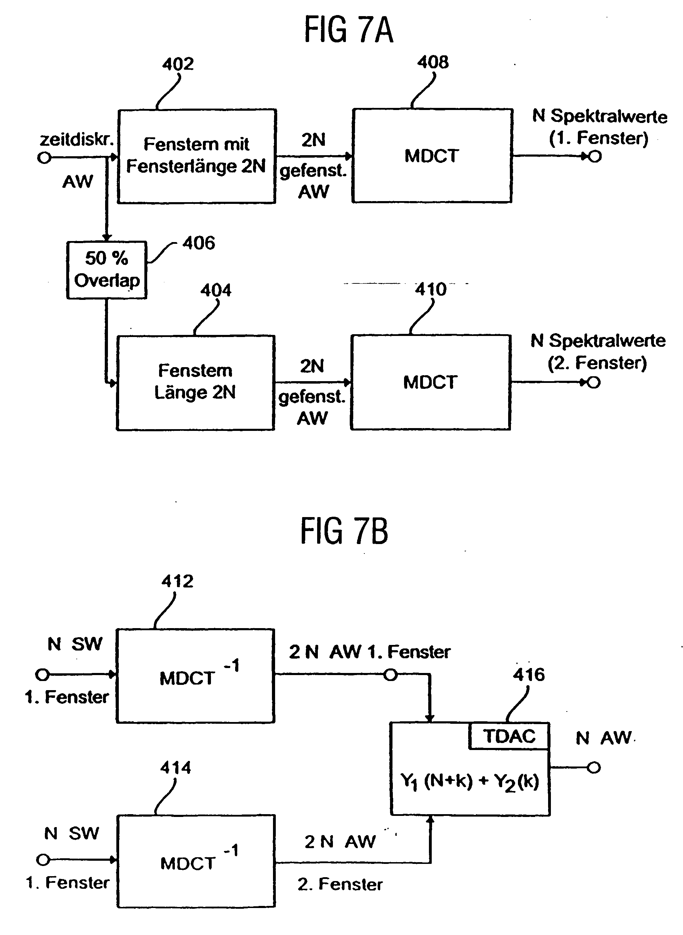

Wie es ausgeführt worden ist, liegt das in den Einbetter in Fig. 1 eingespeiste Signal als Strom von diskreten Werten vor. Die Umsetzungseinrichtung 112 erzeugt aus dem Strom von eingespeisten Werten aufeinanderfolgende Folgen von Abtastwerten, die durch den Vorwärts-Ganzzahl-Transformationsalgorithmus in eine spektrale Darstellung umgesetzt werden. Vorzugsweise wird, wie es ausgeführt worden ist, die Ganzzahl-MDCT verwendet, die unter Verwendung einer Überlappung und einer Addition arbeitet, die in der Technik auch als Overlap and Add bekannt ist. Eine Überlappung von 50% wird vorzugsweise verwendet, dahingehend, daß nacheinander verarbeitete Folgen von Abtastwerten jeweils eine 50%-ige Überlappung haben, dahingehend, daß wenn eine Blocklänge z. B. 2048 Abtastwerte beträgt, der erste Block vom Abtastwert 1 bis zum Abtastwert 2048 reicht, während der zweite Block vom Abtastwert 1024 bis zum Abtastwert 3072 reicht, etc. Damit kann gesagt werden, daß pro "Hinzunahme" von neuen 1024 Abtastwerten ein Satz von ganzzahligen binären Spektraldarstellungswerten mit 1024 ganzzahligen binären Spektraldarstellungswerten erzeugt wird, wie es nachfolgend noch Bezug nehmend auf die Fig. 7a, 7b, 8, 9 und 10 erläutert wird. Durch die Rücktransformation der modifizierten Spektraldarstellungswerte unter Verwendung der Einrichtung 126 erhält man schließlich wieder einen Strom von zeitdiskreten Werten, denen, wenn keine zusätzlichen Synchronisationsinformationen eingebettet werden, was aus Kompatibilitätgesichtspunkten vermieden werden sollte, nicht ansieht, welche Blockeinteilung ursprünglich verwendet worden ist, um die Kurzzeit-Transformationen durchzuführen.

Ein Extraktor, wie er in Fig. 2 gezeigt ist, muß daher, wenn keine Synchronisationsinformationen vorhanden sind, zunächst die Blockeinteilung herausfinden, die ursprünglich von dem Informationen-Einbetter vorgenommen worden ist. Neben der Tatsache, daß zur Extraktion der Nutzdaten aus dem Audiosignal dieselbe Transformation und dasselbe psychoakustische Modell wie bei der Einbettung angewendet werden muß, um dieselbe Binärdarstellung und dieselbe Aufteilung dieser Binärdarstellung in psychoakustisch signifikante und nicht-signifikante Bits zu erhalten, welche die eingebetteten Zusatzdaten wiedergeben, wird bei einem Ausführungsbeispiel, bei dem das in den Extraktor eingebettete Signal keine Synchronisationsinformationen hat, auch der zeitliche Versatz bekannt sein, mit dem die Transformation blockweise auf das ursprüngliche Audiosignal vor der Einbettung angewendet worden ist. Eine solche Problematik tritt auch dann auf, wenn das Audiosignal z. B. gekürzt wurde oder an einer beliebigen Stelle im Signal mit der Extraktion der Zusatzdaten begonnen wurde. Daher umfaßt die in Fig. 2 gezeigte Extraktionsvorrichtung ferner eine Einrichtung zum Ermitteln des bei der Einbettung angewandten Blockrasters, die dem Eingang 130 der in Fig. 2 gezeigten Vorrichtung vorgeschaltet ist. Erfindungsgemäß wird es bevorzugt, bei der Nutzinformationseinbettung eine geringe Redundanz, wie beispielsweise eine Prüfsumme, einzufügen, die es erlaubt, mit gewisser Sicherheit die extrahierten Daten mit richtigem Blockraster von extrahierten Daten mit falschem Blockraster zu unterscheiden.

Wurde beispielsweise eine Blocklänge von 256 zeitdiskreten Werten verwendet, wobei diese Information bekannt sein sollte, oder ebenfalls iterativ ermittelt wird, so wird es bevorzugt, ausgehend von einem bestimmten Wert in dem zeitdiskreten Signal mit eingebrachten Informationen eine Nutzdatenextraktion durchzuführen. Hat man beispielsweise eine Blocklänge von 256 Abtastwerten und extrahiert man zum Suchen des Blockversatzes die vermeintlichen Nutzdaten von 10 x 256 Blöcken mit einem Versatz von einem Abtastwert, so sollte die richtige Prüfsumme 10 mal mit einem Abstand von 256 Abtastwerten vorkommen. Dies bedeutet, daß der Nutzinformationeneinbetter in jedem bei der Einbettung erzeugten Block von Spektraldarstellungswerten dieselbe binäre Zahl bzw. unterschiedliche binäre Zahlen mit einer vorbestimmten Beziehung zueinander, beispielsweise immer doppelt so groß oder immer halb so groß oder immer um eins niedriger etc. einbettet. Diese binäre Zahl kann von den eingebrachten Daten abhängen (z. B. als Prüfsumme oder Hash etc.) oder nicht (Synchronisationswort etc.)

Insbesondere wird so vorgegangen, daß ausgehend von einem bestimmten Wert in dem zeitdiskreten Signal mit den eingebrachten Informationen z. B. 10 aufeinanderfolgende Blöcke verarbeitet werden und die Prüfsummen betrachtet werden. Werden identische Prüfsummen pro Block erwartet, und weichen die Prüfsummen, die erhalten worden sind, ab, so ist dies ein Indiz dafür, daß das Blockraster nicht zufällig getroffen worden ist. In diesem Fall wird die ganze Prozedur wiederholt, nun jedoch nicht mit dem vorher verwendeten Abtastwert als Ausgangspunkt, sondern mit einem Abtastwert als Ausgangspunkt, der eine um eins höherer Ordnungszahl als der vorher verwendete Abtastwert hat. Die für dieses neue Test-Blockraster erhaltenen Prüfsummen werden wieder betrachtet. Sollten sie wieder nicht identisch sein, so wird dasselbe Prozedere noch einmal wiederholt, nun jedoch ausgehend von einem Abtastwert, der eine um zwei höhere Ordnungszahl als der ursprüngliche Abtastwert hatte. Dieses Prozedere wird so lange wiederholt, bis die über der Anzahl N von aufeinanderfolgenden Blöcken verarbeiteten Prüfsummen, wobei N beispielsweise 10 ist, die vorbestimmte Beziehung zueinander haben, beispielsweise gleich sind. Im Extremfall muß diese Prozedur 255 mal wiederholt werden, wenn der Worst Case angenommen wird, nämlich daß der ursprüngliche Wert, bei dem die ganze Prüfprozedur begonnen worden ist, gerade um eine Ordnungszahl höher war als das tatsächliche Blockraster.

So könnten einzelne Blöcke mit falschem Versatz zwar zufällig die richtige Prüfsumme liefern. Es ist jedoch besonders unwahrscheinlich, daß ein solcher "versehentlicher Treffer" N mal hintereinander auftritt, derart, daß eine vermeintliche periodische Blockstruktur vorgespiegelt werden könnte. Die Sicherheit wird immer größer, je größer N gemacht wird. Damit reicht eine sehr geringe Redundanz in den Nutzdaten für die Auffindung der Blockstruktur, dahingehend, daß die Prüfsumme nur sehr grob bestimmt zu werden braucht.

Eine weitere Möglichkeit zum Finden der Blockstruktur ist das Einfügen eines "Pilottones". Dies bedeutet, daß eine oder mehrere Spektrallinien einen festen Wert unterhalb der Hörschwelle bekommen. Zum Beispiel können die höchstfrequenten Bänder hierzu benutzt werden. Die korrekten Werte erscheinen dann im Decoder nur, wenn das richtige Blockraster gefunden wurde. Für diese Prozedur wird statt der Prüfsumme immer der Pilotton-Spektraldarstellungswert untersucht. Diese Prozedur muß im schlimmsten Fall ebenfalls 255 mal durchgeführt werden, wenn ein Block ursprünglich 256 Abtastwerte hatte. Ist die Blockstruktur gefunden, so lassen sich alle weiteren Blöcke mit der bekannten Blockstruktur transformieren und die Zusatzdaten extrahieren.

Wie es in der Technik bekannt ist, stellt eine feste Transformationslänge einen Kompromiß zwischen guter Frequenzauflösung für tonale Signale und guter Zeitauflösung für transiente Signale dar. Eine Umschaltung der Blocklänge, wie sie in der gehörangepaßten Audiocodierung üblich ist, ermöglicht eine bessere Anpassung des durch die Zusatzdaten hinzugefügten Fehlers an das Audiosignal. Wenn der Nutzinformationeneinbetter ausgebildet ist, um Signalangepaßte Blockumschaltungsalgorithmen einzusetzen, so kann der Extraktor nur vernünftig arbeiten, wenn ihm diese Information beispielsweise als Seiteninformation mitgeteilt wird, oder wenn er ausgebildet ist, um z. B. durch die in die Nutzdaten eingefügte Redundanz die tatsächlich verwendete Blockstruktur herauszufinden. Hierzu wird der Extraktor bei einem Ausführungsbeispiel der Erfindung die Transformation mit allen im aktuellen Block möglichen Transformationslängen und Fensterformen anwenden. Der Extraktor muß dann anhand der beispielsweise eingefügten Prüfsummen entscheiden, mit welcher Variante der Transformation, also mit welcher Blocklänge und Fensterform die Einbettung erfolgt ist.

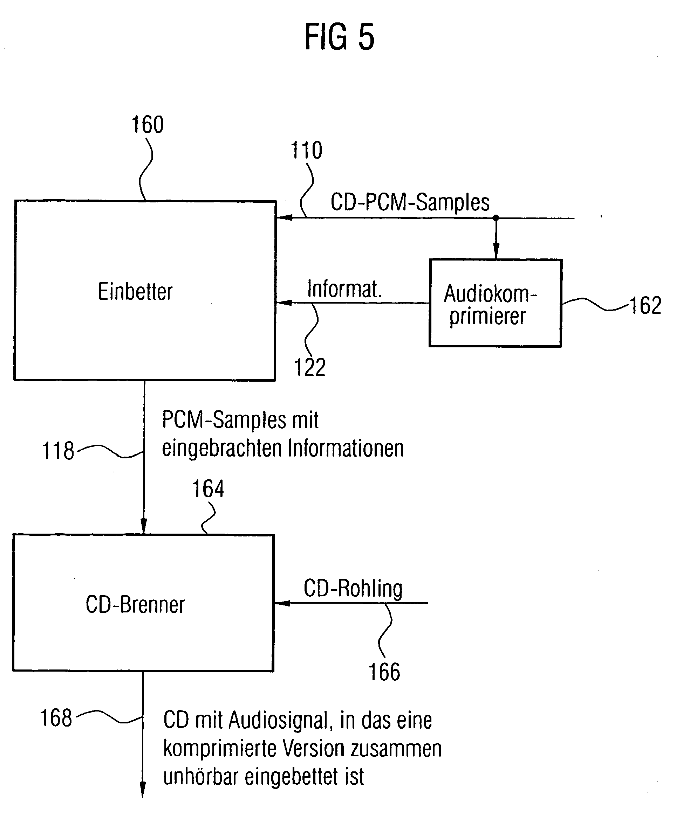

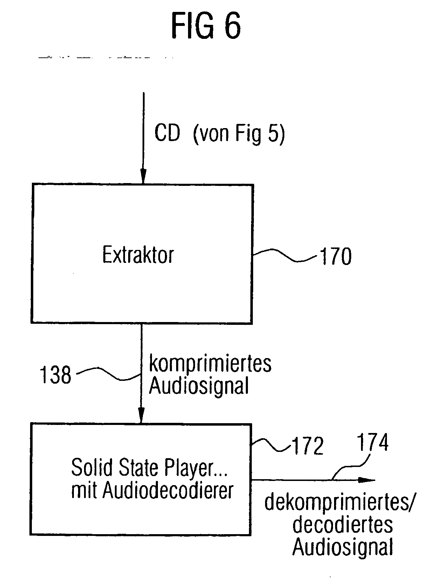

Nachfolgend wird Bezug nehmend auf Fig. 5 auf ein bevorzugtes Anwendungsfeld für das erfindungsgemäße Konzept eingegangen. Das allgemeine Anwendungsfeld ist die Audio-CD bzw. die Erzeugung von CD-Player-kompatiblen Audiodaten, die auch als PCM-Sample-Audiodaten bezeichnet werden. Erfindungsgemäß lassen sich in die Audiodaten ohne hörbare Veränderungen und ohne Kompatibilitätsprobleme Zusatzdaten mit hoher Datenrate einbringen. Das beschriebene Auffinden der Blockstruktur bei der Einbettung erlaubt auch eine Synchronisation der Extraktion der Zusatzdaten beim Abspielen eines beliebigen Ausschnitts eines Audiotracks, wie beispielsweise nach der Betätigung eines Vorlaufs oder eines Random-Play-Modus eines CD-Players.

Ferner enthält eine Audio-CD Fehlerschutzmechanismen, die gewisse Fehler beim Auslesen der Rohdaten korrigieren können und so die ursprünglichen Audioabtastwerte exakt rekonstruieren können. So lange diese Fehlerkorrektur erfolgreich ist, erfolgt auch eine "automatische" Korrektur der in die Audiodaten eingebrachten Nutzinformationen, so daß sich die Nutzinformationen aus den korrigierten Audioabtastwerten wieder extrahieren lassen. Ist eine Fehlerkorrektur jedoch nicht mehr möglich, so werden bei bestimmten CD-Playern Fehlerverschleierungsmechanismen angewandt, die zwar die hörbaren Fehler reduzieren, jedoch die Audioabtastwerte nicht mehr exakt rekonstruieren. Damit werden selbstverständlich auch die Nutzdaten nicht mehr exakt extrahierbar sein. Treten also solche Fehler auf, so lassen sich die Zusatzdaten ebenfalls nicht mehr fehlerfrei extrahieren. Um trotzdem eine zuverlässige Übertragung der Zusatzdaten zu ermöglichen, wird es in diesem Fall bevorzugt, die Zusatzdaten vor ihrer Einbettung in die Audiodaten mit einem an die Art des erwarteten Fehlers angepaßten Fehlerschutzverfahren zu codieren. Hierzu können beliebige in der Technik bekannte Vorwärtsfehlerkorrekturverfahren eingesetzt werden, die im Zusammenspiel mit z. B. einem Viterbi-Decodierer im Wasserzeichenextraktor eine Nutzdatenextraktion mit einer maximal einstellbaren Bitfehlerrate ermöglichen, auch wenn das Signal/Rausch-Verhältnis aufgrund von Fehlern im Übertragungskanal, wie beispielsweise der CD oder einem leitungsgebundenen Kanal aufgetreten sind.

Bei bevorzugten Ausführungsbeispielen wird es bevorzugt, folgende Zusatzdaten auf Audio-CDs zu übertragen. Eine Variante der Zusatzdaten bzw. Nutzinformationen sind Videodaten. Mit modernen Videocodierverfahren, wie beispielsweise MPEG-4 Video lassen sich Videodaten in guter Qualität so stark komprimieren, daß sie mit dem erfindungsgemäßen Einbettungskonzept in das unkomprimierte Audiosignal, also die Folge von PCM-Samples eingebettet werden können.

Ferner können Audiodaten in das Audio-Trägersignal eingebettet werden. Moderne Audiocodierverfahren, wie beispielsweise MP3 oder AAC, erlauben eine hohe Audioqualität bei Datenraten von 128 kBit/s und weniger. Damit lassen sich mit dem erfindungsgemäßen Konzept in die unkomprimierten Audiodaten komprimierte Audiodaten einbetten. So wird es beispielsweise bevorzugt, die für z. B. tragbare Abspielgeräte nötigen komprimierten Audiodaten bereits mit auf die Audio-CD aufzubringen. Damit lassen sich Audio-CD-Player realisieren, die die Audiodaten auf tragbare Abspielgeräte übertragen können, ohne diese selbst mit hohem Rechenaufwand komprimieren zu müssen. Die komprimierte Variante der Audiosignale kann bereits im Mastering-Prozeß der Audio-CD in die Audiodaten eingefügt werden. Die Komplexität des Extraktionsprozesses ist deutlich geringer als die eines kompletten Encodierprozesses zur Erzeugung der komprimierten Audiodaten selbst.

Die vorstehende Systematik wird nachfolgend anhand der Fig. 5 und 6 dargestellt. So zeigt Fig. 5 einen Einbetter 160, wie er in Fig. 1 dargestellt ist. Der Einbetter enthält einerseits die CD-PCM-Samples über seinen Eingang 110 sowie die einzubringenden Informationen in binärer Form über seinen Eingang 122. Ferner ist in Fig. 5 ein Audiokomprimierer 162 gezeigt, der aus den CD-PCM-Samples am Eingang 110 des Einbetters 160 die einzubringenden Informationen erzeugt, die eine komprimierte Version der ursprünglichen CD-PCM-Samples darstellen. Der Einbetter liefert ausgangsseitig, also an seinem Ausgang 118 ein Audiosignal, das psychoakustisch transparent eingebettet eine komprimierte Version von sich selbst enthält. Diese Informationen werden dann einem CD-Brenner 164 zugeführt, der gleichzeitig einen CD-Rohling 166 empfängt, um das an dem Eingang 118 anliegende Audiosignal, das in sich eingebettet eine komprimierte Version von sich selbst enthält, auf eine CD zu brennen, die an einem Ausgang 168 des CD-Brenners erhalten wird.

Die durch das Prozedere in Fig. 5 erzeugte CD wird in einen Extraktor 170 eingelegt, der z. B. Teil eines CD-Players sein kann oder in einem Allzweck-Computer ausgebildet sein kann. Der Extraktor 170 in Fig. 6 ist wie in Fig. 2 dargestellt ausgebildet. Der Extraktor 170 ist nicht so sehr an den nicht-komprimierten Audiodaten interessiert, sondern extrahiert aus der CD bzw. dem CD-kompatiblen Datenstrom lediglich das komprimierte Audiosignal an seinem Ausgang 138, das hier als binärer Datenstrom vorliegt. Erfindungsgemäß wird es bevorzugt, diesen Datenstrom, der das komprimierte Audiosignal darstellt, in einen tragbaren Player mit begrenzter Speicherkapazität zu laden, wie beispielsweise in einen Solid-State-Player 172. Der Solid-State-Player 172 umfaßt einen Audiodecodierer zum Decodieren bzw. Dekomprimieren des an dem Ausgang 138 anliegenden komprimierten Audiosignals, das dann durch den Player 172 wiedergegeben werden kann, wie es durch einen Ausgang 174 in Fig. 6 dargestellt ist. Vorteilhaft an diesem Konzept ist, daß der Extraktor 170 wesentlich weniger aufwendig ausgestaltet werden kann wie ein kompletter Audioencodierer, was insbesondere den Vorteil mit sich bringt, daß ein solches Gerät deutlich preisgünstiger angeboten werden kann als ein kompletter Audioencodierer, und zwar z. B. in einem Szenario, in dem ein Käufer eine CD erwirbt, und diese CD auch auf seinem Solid-State-Player abspielen möchte. So müßte er das Signal auf der CD bzw. den z. B. über einen über das Internet erhältlichen Datenstrom bei sich zu Hause komplett encodieren, um das Signal auf seinen Solid-State-Player zu laden. Erfindungsgemäß muß lediglich eine Extraktion der komprimierten Version des Audiosignals von der CD mit erheblich geringerem Aufwand als eine komplette Encodierung durchgeführt werden, wobei dieser Aufwand ohne weiteres in einen günstigeren Preis umgesetzt werden kann.

Im nachfolgenden wird als Beispiel für einen ganzzahligen Transformationsalgorithmus auf den IntMDCT-Transformationsalgorithmus eingegangen, der in "Audio Coding Based on Integer Transforms" 111-te AES-Versammlung, New York, 2001, beschrieben ist. Die IntMDCT ist besonders günstig, da sie die attraktiven Eigenschaften der MDCT hat, wie z. B. eine gute spektrale Darstellung des Audiosignals, eine kritische Abtastung und eine Blocküberlappung aufweist.

Bevor auf die bevorzugte IntMDCT näher eingegangen wird, wird anhand der Fig. 7a und 7b eine konventionelle MDCT dargestellt. Um eine gute Frequenzselektivität zu erreichen, verwenden moderne Audio-Codierer typischerweise eine Block-Überlappung. Ein solcher Fall ist in Fig. 7a dargestellt. Zunächst werden beispielsweise 2048 zeitdiskrete Audio-Abtastwerte genommen und mittels einer Einrichtung 402 gefenstert. Das Fenster, das die Einrichtung 402 verkörpert, hat eine Fensterlänge von 2N Abtastwerten und liefert ausgangsseitig einen Block von 2N gefensterten Abtastwerten. Um eine Fensterüberlappung zu erreichen, wird mittels einer Einrichtung 404, die lediglich aus Übersichtlichkeitsgründen in Fig. 7a getrennt von der Einrichtung 402 dargestellt ist, ein zweiter Block von 2N gefensterten Abtastwerten gebildet. Die in die Einrichtung 404 eingespeisten 2048 Abtastwerte sind jedoch nicht die an das erste Fenster unmittelbar anschließenden zeitdiskreten Audio-Abtastwerte, sondern beinhalten die zweite Hälfte der durch die Einrichtung 402 gefensterten Abtastwerte und beinhalten zusätzlich lediglich 1024 "neue" Abtastwerte. Die Überlappung ist durch eine Einrichtung 406 in Fig. 7a symbolisch dargestellt, die einen Überlappungsgrad von 50% bewirkt. Sowohl die durch die Einrichtung 402 ausgegebenen 2N gefensterten Abtastwerte als auch die durch die Einrichtung 404 ausgegebenen 2N gefensterten Abtastwerte werden dann mittels einer Einrichtung 408 bzw. 410 dem MDCT-Algorithmus unterzogen. Die Einrichtung 408 liefert gemäß dem bekannten -MDCT-Algorithmus N Spektralwerte für das erste Fenster, während die Einrichtung 410 ebenfalls N Spektralwerte liefert, jedoch für das zweite Fenster, wobei zwischen dem ersten Fenster und dem zweiten Fenster eine Überlappung von 50% besteht.

Im Decodierer werden die N Spektralwerte des ersten Fensters, wie es in Fig. 7b gezeigt ist, einer Einrichtung 412, die eine inverse modifizierte diskrete Cosinustransformation durchführt, zugeführt. Dasselbe gilt für die N Spektralwerte des zweiten Fensters. Diese werden einer Einrichtung 414 zugeführt, die ebenfalls eine inverse modifizierte diskrete Cosinustransformation durchführt. Sowohl die Einrichtung 412 als auch die Einrichtung 414 liefern jeweils 2N Abtastwerte für das erste Fenster bzw. 2N Abtastwerte für das zweite Fenster.

In einer Einrichtung 416, die in Fig. 7b mit TDAC (TDAC = Time Domain Aliasing Cancellation) bezeichnet ist, wird die Tatsache berücksichtigt, daß die beiden Fenster überlappend sind. Insbesondere wird ein Abtastwert $y_1$ der zweiten Hälfte des ersten Fensters, also mit einem Index N+k, mit einem Abtastwert $y_2$ aus der ersten Hälfte des zweiten Fensters, also mit einem Index k summiert, so daß sich ausgangsseitig, also im Decodierer, N decodierte zeitliche Abtastwerte ergeben.

Es sei darauf hingewiesen, daß durch die Funktion der Einrichtung 416, die auch als Add-Funktion bezeichnet wird, die in dem durch Fig. 7a schematisch dargestellten Codierer durchgeführte Fensterung gewissermaßen automatisch berücksichtigt wird, so daß in dem durch Fig. 7b dargestellten Decodierer keine explizite "inverse Fensterung" stattzufinden hat.

Wenn die durch die Einrichtung 402 oder 404 implementierte Fensterfunktion mit w(k) bezeichnet wird, wobei der Index k den Zeitindex darstellt, bezeichnet wird, so muß die Bedingung erfüllt sein, daß das Fenstergewicht w(k) im Quadrat addiert zu dem Fenstergewicht w(N+k) im Quadrat zusammen 1 ergibt, wobei k von 0 bis N-1 läuft. Wenn ein Sinus-Fenster verwendet wird, dessen Fenster-Gewichtungen der ersten Halbwelle der Sinus-Funktion folgen, so ist diese Bedingung immer erfüllt, da das Quadrat des Sinus und das Quadrat des Cosinus für jeden Winkel zusammen den Wert 1 ergeben.

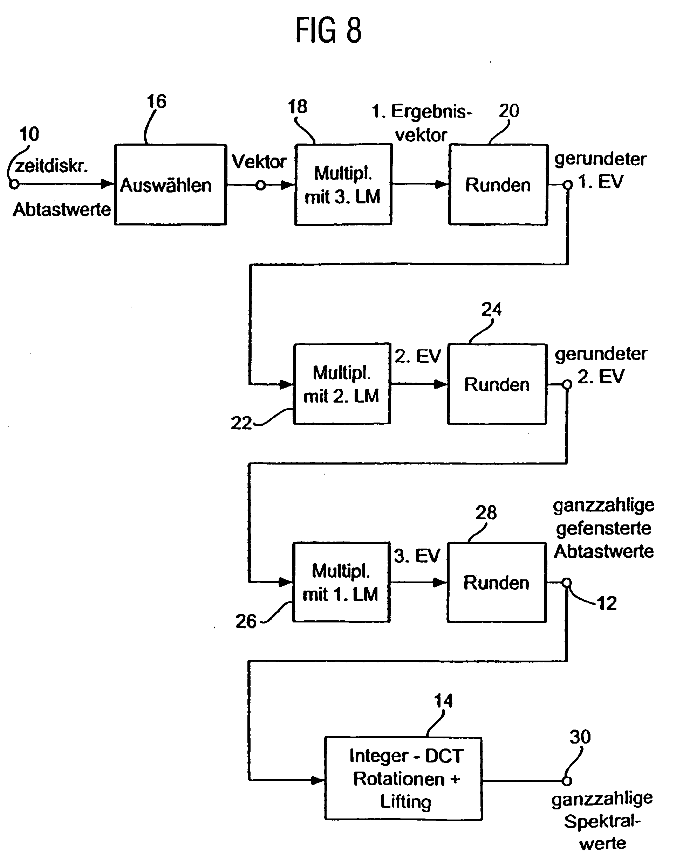

Fig. 8 zeigt ein Übersichtsdiagramm für die erfindungsgemäß bevorzugte Vorrichtung zum Verarbeiten von zeitdiskreten Abtastwerten, die ein Audiosignal darstellen, um ganzzahlige Werte zu erhalten, auf denen aufbauend der Int-MDCT-Ganzzahl-Transformationsalgorithmus arbeitet. Die zeitdiskreten Abtastwerte werden durch die in Fig. 8 gezeigte Vorrichtung gefenstert und optional in eine spektrale Darstellung umgesetzt. Die zeitdiskreten Abtastwerte, die an einem Eingang 10 in die Vorrichtung eingespeist werden, werden mit einem Fenster w mit einer Länge, die 2N zeitdiskreten Abtastwerten entspricht, gefenstert, um an einem Ausgang 12 ganzzahlige gefensterte Abtastwerte zu erreichen, welche dazu geeignet sind, um mittels einer Transformation und insbesondere der Einrichtung 14 zum Ausführen einer ganzzahligen DCT in eine spektrale Darstellung umgesetzt zu werden. Die ganzzahlige DCT ist ausgebildet, um aus N Eingangswerten N Ausgangswerte zu erzeugen, was im Gegensatz zu der MDCT-Funktion 408 von Fig. 7a steht, die aus 2N gefensterten Abtastwerten aufgrund der MDCT-Gleichung lediglich N Spektralwerte erzeugt.

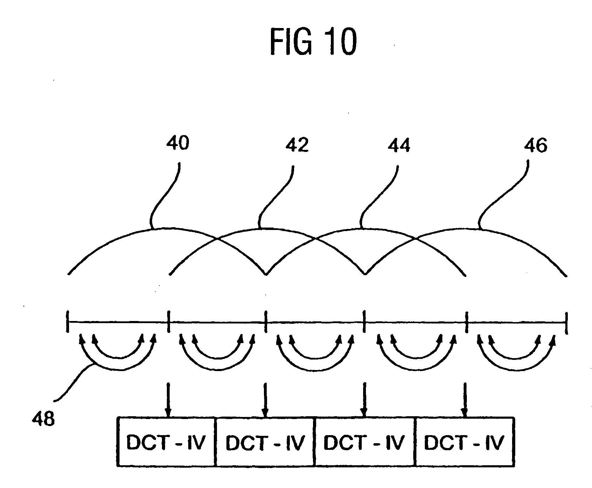

Zum Fenstern der zeitdiskreten Abtastwerte werden zunächst in einer Einrichtung 16 zwei zeitdiskrete Abtastwerte ausgewählt, die zusammen einen Vektor von zeitdiskreten Abtastwerten darstellen. Ein zeitdiskreter Abtastwert, der durch die Einrichtung 16 ausgewählt wird, liegt im ersten Viertel des Fensters. Der andere zeitdiskrete Abtastwert liegt in dem zweiten Viertel des Fensters, wie es anhand von Fig. 10 noch detaillierter ausgeführt wird. Der durch die Einrichtung 16 erzeugte Vektor wird nunmehr mit einer Drehmatrix der Dimension 2 x 2 beaufschlagt, wobei diese Operation nicht unmittelbar durchgeführt wird, sondern mittels mehrerer sogenannten Lifting-Matrizen.

Eine Lifting-Matrix hat die Eigenschaft, daß sie nur ein Element aufweist, das von dem Fenster w abhängt und ungleich "1" oder "0" ist.

Die Faktorisierung von Wavelet-Transformationen in Lifting-Schritte ist in der Fachveröffentlichung "Factoring Wavelet Transforms Into Lifting Steps", Ingrid Daubechies und Wim Sweldens, Preprint, Bell Laboratories, Lucent Technologies, 1996, dargestellt. Allgemein ist ein Lifting-Schema eine einfache Beziehung zwischen perfekt rekonstruierenden Filterpaaren, die dasselbe Tiefpaß- oder Hochpaßfilter haben. Jedes Paar komplementärer Filter kann in Lifting-Schritte faktorisiert werden. Insbesondere gilt dies für Givens-Rotationen. Es sei der Fall betrachtet, bei dem die Polyphasenmatrix eine Givens-Rotation ist. Es gilt dann:

$$\begin{pmatrix} \cos\alpha & -\sin\alpha \\ \sin\alpha & \cos\alpha \end{pmatrix} = \begin{pmatrix} 1 & \frac{\cos\alpha-1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha-1}{\sin\alpha} \\ 0 & 1 \end{pmatrix} \qquad (1)$$

Jede der drei rechts des Gleichheitszeichens stehenden Lifting-Matrizen hat als Hauptdiagonalelemente den Wert "1".

Ferner ist in jeder Lifting-Matrix ein Nebendiagonalelement gleich 0, und ein Nebendiagonalelement vom Drehwinkel $\alpha$ abhängig.

Der Vektor wird nunmehr mit der dritten Lifting-Matrix, d. h. der Liftingmatrix ganz rechts in obiger Gleichung, multipliziert, um einen ersten Ergebnisvektor zu erhalten. Dies ist in Fig. 8 durch eine Einrichtung 18 dargestellt. Es wird nunmehr der erste Ergebnisvektor mit einer beliebigen Rundungsfunktion, die die Menge der reellen Zahlen in die Menge der ganzen Zahlen abbildet, gerundet, wie es in Fig. 8 durch eine Einrichtung 20 dargestellt ist. Am Ausgang der Einrichtung 20 wird ein gerundeter erster Ergebnisvektor erhalten. Der gerundete erste Ergebnisvektor wird nunmehr in eine Einrichtung 22 zum Multiplizieren desselben mit der mittleren, d. h. zweiten, Lifting-Matrix eingespeist, um einen zweiten Ergebnisvektor zu erhalten, der in einer Einrichtung 24 wiederum gerundet wird, um einen gerundeten zweiten Ergebnisvektor zu erhalten. Der gerundete zweite Ergebnisvektor wird nunmehr in eine Einrichtung 26 eingespeist, und zwar zum Multiplizieren desselben mit der links in der obigen Gleichung aufgeführten, d. h. ersten, Liftingmatrix, um einen dritten Ergebnisvektor zu erhalten, der schließlich noch mittels einer Einrichtung 28 gerundet wird, um schließlich an dem Ausgang 12 ganzzahlige gefensterte Abtastwerte zu erhalten, die nun, wenn eine spektrale Darstellung derselben gewünscht wird, durch die Einrichtung 14 verarbeitet werden müssen, um an einem Spektralausgang 30 ganzzahlige Spektralwerte zu erhalten.

Vorzugsweise ist die Einrichtung 14 als Ganzzahl-DCT oder Integer-DCT ausgeführt.

Die diskrete Cosinus-Transformation gemäß Typ 4 (DCT-IV) mit einer Länge N ist durch folgende Gleichung gegeben:

$$X_t(m) = \sqrt{\frac{2}{N}} \sum_{k=0}^{N-1} x(k) \cos\left(\frac{\pi}{4N}(2k+1)(2m+1)\right) \qquad (2)$$

Die Koeffizienten der DCT-IV bilden eine orthonormale N x N Matrix. Jede orthogonale N x N-Matrix kann in N (N-1)/2 Givens-Rotationen zerlegt werden, wie es in der Fachveröffentlichung P. P. Vaidyanathan, "Multirate Systems And Filter Banks", Prentice Hall, Englewood Cliffs, 1993, ausgeführt ist. Es sei darauf hingewiesen, daß auch weitere Zerlegungen existieren.

Bezüglich der Klassifikationen der verschiedenen DCT-Algorithmen sei auf H. S. Malvar, "Signal Processing With Lapped Transforms", Artech House, 1992, verwiesen. Allgemein unterscheiden sich die DCT-Algorithmen durch die Art ihrer Basisfunktionen. Während die DCT-IV, die hier bevorzugt wird, nicht-symmetrische Basisfunktionen umfaßt, d. h. eine Cosinus-Viertelwelle, eine Cosinus-3/4-Welle, eine Cosinus-5/4-Welle, eine Cosinus-7/4-Welle, etc., hat die diskrete Cosinustransformation z. B. vom Typ II (DCT-II), achsensymmetrische und punktsymmetrische Basisfunktionen. Die 0-te Basisfunktion hat einen Gleichanteil, die erste Basisfunktion ist eine halbe Cosinuswelle, die zweite Basisfunktion ist eine ganze Cosinuswelle, usw. Aufgrund der Tatsache, daß die DCT-II den Gleichanteil besonders berücksichtigt, wird sie bei der Videocodierung verwendet, nicht aber bei der Audiocodierung, da bei der Audiocodierung im Gegensatz zur Videocodierung der Gleichanteil nicht von Relevanz ist.

Im nachfolgend wird darauf eingegangen, wie der Drehwinkel $\alpha$ der Givens-Rotation von der Fensterfunktion abhängt.

Eine MDCT mit einer Fensterlänge von 2N kann in eine diskrete Cosinustransformation vom Typ IV mit einer Länge N reduziert werden. Dies wird dadurch erreicht, daß die TDAC-Operation explizit im Zeitbereich durchgeführt wird, und daß dann die DCT-IV angewandt wird. Bei einer 50%igen Überlappung überlappt die linke Hälfte des Fensters für einen Block t mit der rechten Hälfte des vorausgehenden Blocks, d. h. des Blocks t-1. Der überlappende Teil zwei aufeinanderfolgender Blöcke t-1 und t wird im Zeitbereich, d. h. vor der Transformation, folgendermaßen vorverarbeitet, d. h. zwischen dem Eingang 10 und dem Ausgang 12 von Fig. 8 verarbeitet:

$$\begin{pmatrix} \tilde{x}_t(k) \\ \tilde{x}_{t-1}(N-1-k) \end{pmatrix} = \begin{pmatrix} w\left(\frac{N}{2}+k\right) & -w\left(\frac{N}{2}-1-k\right) \\ w\left(\frac{N}{2}-1-k\right) & w\left(\frac{N}{2}+k\right) \end{pmatrix} \begin{pmatrix} x_t\left(\frac{N}{2}+k\right) \\ x_t\left(\frac{N}{2}-1-k\right) \end{pmatrix} \qquad (3)$$

Die mit der Tilde bezeichneten Werte sind die Werte am Ausgang 12 von Fig. 8, während die ohne Tilde in der obigen Gleichung bezeichnete x Werte die Werte am Eingang 10 bzw. hinter der Einrichtung 16 zum Auswählen sind. Der Laufindex k läuft von 0 bis N/2-1, während w die Fensterfunktion darstellt.

Aus der TDAC-Bedingung für die Fensterfunktion w gilt folgender Zusammenhang:

$$w\left(\frac{N}{2}+k\right)^2 + w\left(\frac{N}{2}-1-k\right)^2 = 1 \qquad (4)$$

Für bestimmte Winkel $\alpha_k$, k = 0, ..., N/2-1 kann diese Vorverarbeitung im Zeitbereich als Givens-Rotation geschrieben werden, wie es ausgeführt worden ist.

Der Winkel $\alpha$ der Givens-Rotation hängt folgendermaßen von der Fensterfunktion w ab:

```
α = arctan[w(N/2-1-k) / w(N/2 + k)]    (5)
```

Es sei darauf hingewiesen, daß beliebige Fensterfunktionen w eingesetzt werden können, solange sie diese TDAC-Bedingung erfüllen.

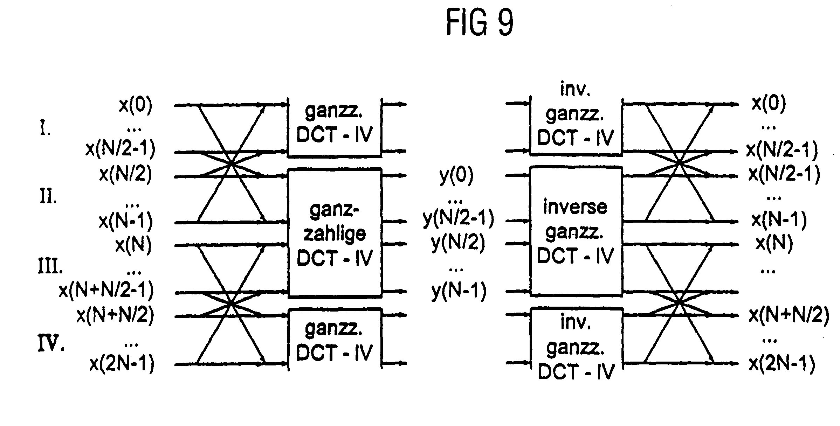

Im nachfolgenden wird anhand von Fig. 9 ein kaskadierter Codierer und Decodierer beschrieben. Die zeitdiskreten Abtastwerte x(0) bis x(2N-1), die durch ein Fenster gemeinsam "gefenstert" werden, werden zunächst derart durch die Einrichtung 16 von Fig. 8 ausgewählt, daß der Abtastwert x(0) und der Abtastwert x(N-1), d. h. ein Abtastwert aus dem ersten Viertel des Fensters und ein Abtastwert aus dem zweiten Viertel des Fensters, ausgewählt werden, um den Vektor am Ausgang der Einrichtung 16 zu bilden. Die sich überkreuzenden Pfeile stellen schematisch die Lifting-Multiplikationen und anschließenden Rundungen der Einrichtungen 18, 20 bzw. 22, 24 bzw. 26, 28 dar, um am Eingang der DCT-IV-Blöcke die ganzzahligen gefensterten Abtastwerte zu erhalten.

Wenn der erste Vektor wie oben beschrieben verarbeitet ist, wird ferner ein zweiter Vektor aus den Abtastwerten x(N/2-1) und x(N/2), d. h. wieder ein Abtastwert aus dem ersten Viertel des Fenster und ein Abtastwert aus dem zweiten Viertel des Fensters, ausgewählt und wiederum durch den in Fig. 8 beschriebenen Algorithmus verarbeitet. Analog dazu werden sämtliche anderen Abtastwertpaare aus dem ersten und zweiten Viertel des Fensters bearbeitet. Die selbe Verarbeitung wird für das dritte und vierte Viertel des ersten Fensters durchgeführt. Nunmehr liegen am Ausgang 12 2N gefensterte ganzzahlige Abtastwerte vor, die nunmehr so, wie es in Fig. 9 dargestellt ist, in eine DCT-IV-Transformation eingespeist werden. Insbesondere werden die ganzzahligen gefensterten Abtastwerte des zweiten und dritten Viertels in eine DCT eingespeist. Die gefensterten ganzzahligen Abtastwerte des ersten Viertels des Fensters werden in eine vorausgehende DCT-IV zusammen mit den gefensterten ganzzahligen Abtastwerten des vierten Viertels des vorausgehenden Fensters verarbeitet. Analog dazu wird das vierte Viertel der gefensterten ganzzahligen Abtastwerte in Fig. 9 mit dem ersten Viertel des nächsten Fensters zusammen in eine DCT-IV-Transformation eingespeist. Die mittlere in Fig. 9 gezeigte ganzzahlige DCT-IV-Transformation 32 liefert nunmehr N ganzzahlige Spektralwerte y(0) bis y(N-1). Diese ganzzahligen Spektralwerte können nunmehr beispielsweise einfach Entropie-codiert werden, ohne daß eine dazwischenliegende Quantisierung erforderlich ist, da die Fensterung und Transformation ganzzahlige Ausgangswerte liefert.

In der rechten Hälfte von Fig. 9 ist ein Decodierer dargestellt. Der Decodierer bestehend aus Rücktransformation und "inverser Fensterung" arbeitet invers zum Codierer. Es ist bekannt, daß zur Rücktransformation einer DCT-IV eine inverse DCT-IV verwendet werden kann, wie es in Fig. 9 dargestellt ist. Die Ausgangswerte der Decodierer-DCT-IV 34 werden nunmehr, wie es in Fig. 9 dargestellt ist, mit den entsprechenden Werten der vorausgehenden Transformation bzw. der nachfolgenden Transformation invers verarbeitet, um aus den ganzzahligen gefensterten Abtastwerten am Ausgang der Einrichtung 34 bzw. der vorausgehenden und nachfolgenden Transformation wieder zeitdiskrete Audio-Abtastwerte x(0) bis x(2N-1) zu erzeugen.

Die ausgangsseitige Operation geschieht durch eine inverse Givens-Rotation, d. h. derart, daß die Blöcke 26, 28 bzw. 22, 24 bzw. 18, 20 in der entgegengesetzten Richtung durchlaufen werden. Dies sei anhand der zweiten Lifting-Matrix von Gleichung 1 näher dargestellt. Wenn (im Codierer) der zweite Ergebnisvektor durch Multiplikation des gerundeten ersten Ergebnisvektors mit der zweiten Liftingmatrix (Einrichtung 22) gebildet wird, so ergibt sich folgender Ausdruck:

$$(x, y) \mapsto (x, y + x\sin\alpha) \qquad (6)$$

Die Werte x, y auf der rechten Seite von Gleichung 6 sind Ganzzahlen. Dies trifft jedoch für den Wert $x\sin\alpha$ nicht zu. Hier muß die Rundungsfunktion r eingeführt werden, wie es in der nachfolgenden Gleichung

$$(x, y) \mapsto (x, y + r(x\sin\alpha)) \qquad (7)$$

dargestellt ist. Diese Operation führt die Einrichtung 24 aus.

Die inverse Abbildung (im Decodierer) ist folgendermaßen definiert:

$$(x', y') \mapsto (x', y' - r(x'\sin\alpha)) \qquad (8)$$

Aufgrund dem Minuszeichen vor der Rundungsoperation wird ersichtlich, daß die ganzzahlige Approximierung des Lifting-Schritts umgekehrt werden kann, ohne daß ein Fehler eingeführt wird. Die Anwendung dieser Approximation auf jeden der drei Lifting-Schritte führt zu einer ganzzahligen Approximation der Givens-Rotation. Die gerundete Rotation (im Codierer) kann umgekehrt werden (im Decodierer), ohne daß ein Fehler eingeführt wird, und zwar indem die inversen gerundeten Lifting-Schritte in umgekehrter Reihenfolge durchlaufen werden, d. h. wenn beim Decodieren der Algorithmus von Fig. 8 von unten nach oben durchgeführt wird.

Wenn die Rundungsfunktion r punktsymmetrisch ist, ist die inverse gerundete Rotation identisch zu der gerundeten Rotation mit dem Winkel -$\alpha$ und lautet folgendermaßen:

$$\begin{pmatrix} \cos\alpha & \sin\alpha \\ -\sin\alpha & \cos\alpha \end{pmatrix} \qquad (9)$$

Die Lifting-Matrizen für den Decodierer, d. h. für die inverse Givens-Rotation, ergibt sich in diesem Fall unmittelbar aus Gleichung (1), indem lediglich der Ausdruck "sin $\alpha$" durch den Ausdruck "-sin $\alpha$" ersetzt wird.

Im nachfolgenden wird anhand von Fig. 10 noch einmal die Zerlegung einer üblichen MDCT mit überlappenden Fenstern 40 bis 46 dargelegt. Die Fenster 40 bis 46 überlappen jeweils zu 50%. Pro Fenster werden zunächst Givens-Rotationen innerhalb des ersten und zweiten Viertels eines Fensters bzw. innerhalb des dritten und vierten Viertels eines Fensters ausgeführt, wie es durch die Pfeile 48 schematisch dargestellt ist. Dann werden die rotierten Werte, d. h. die gefensterten ganzzahligen Abtastwerte derart in eine N-zu-N-DCT eingespeist, daß immer das zweite und dritte Viertel eines Fensters bzw. das vierte und erste Viertel eines darauffolgenden Fensters gemeinsam mittels eines DCT-IV-Algorithmus in eine spektrale Darstellung umgesetzt wird.

Es werden daher die üblichen Givens-Rotation in Lifting-Matrizen zerlegt, die sequentiell ausgeführt werden, wobei nach jeder Lifting-Matrix-Multiplikation ein Rundungsschritt eingeführt wird, derart, daß die Gleitkomma-Zahlen unmittelbar nach ihrer Entstehung gerundet werden, derart, daß vor jeder Multiplikation eines Ergebnisvektors mit einer Lifting-Matrix der Ergebnisvektor lediglich Ganzzahlen hat.

Die Ausgangswerte bleiben also immer ganzzahlig, wobei es bevorzugt wird, auch ganzzahlige Eingangswerte zu verwenden. Dies stellt keine Einschränkung dar, da jegliche beispielsweise PCM-Abtastwerte, wie sie auf einer CD abgespeichert sind, ganzzahlige Zahlenwerte sind, deren Wertebereich je nach Bitbreite variiert, d. h. abhängig davon, ob die zeitdiskreten digitalen Eingangswerte 16-Bit-Werte oder 24-Bit-Werte sind. Dennoch ist, wie es ausgeführt worden ist, der gesamte Prozeß invertierbar, indem die inversen Rotationen in umgekehrter Reihenfolge ausgeführt werden. Es existiert somit eine ganzzahlige Approximation der MDCT mit perfekter Rekonstruktion, also eine verlustlose Transformation.

Die gezeigte Transformation liefert ganzzahlige Ausgangswerte statt Gleitkommawerte. Sie liefert eine perfekte Rekonstruktion, so daß kein Fehler eingeführt wird, wenn eine Vorwärts- und dann eine Rückwärtstransformation ausgeführt werden. Die Transformation ist gemäß einem bevorzugten Ausführungsbeispiel der vorliegenden Erfindung ein Ersatz für die modifizierte diskrete Cosinustransformation. Auch andere Transformationsverfahren können jedoch ganzzahlig ausgeführt werden, so lange eine Zerlegung in Rotationen und eine Zerlegung der Rotationen in Lifting-Schritte möglich ist.

Die ganzzahlige MDCT hat die meisten günstigen Eigenschaften der MDCT. Sie hat eine überlappende Struktur, wodurch eine bessere Frequenzselektivität als bei nicht-überlappenden Blocktransformationen erhalten wird. Aufgrund der TDAC-Funktion, die bereits beim Fenstern vor der Transformation berücksichtigt wird, wird eine kritische Abtastung beibehalten, so daß die Gesamtanzahl von Spektralwerten, die ein Audiosignal darstellen, gleich der Gesamtanzahl von Eingangs-Abtastwerten ist.

Verglichen mit einer normalen MDCT, die Gleitkomma-Abtastwerte liefert, zeigt sich bei der beschriebenen bevorzugten ganzzahligen Transformation, daß lediglich in dem Spektralbereich, in dem wenig Signalpegel ist, das Rauschen im Vergleich zur normalen MDCT erhöht ist, während sich diese Rauscherhöhung bei signifikanten Signalpegeln nicht bemerkbar macht. Dafür bietet sich die ganzzahlige Verarbeitung für eine effiziente Hardware-Implementation an, da lediglich Multiplikationsschritte verwendet werden, die ohne weiteres in Verschieben-Addieren-Schritte (Shift/Add-Schritte) zerlegt werden können, welche einfach und schnell hardwaremäßig implementiert werden können. Selbstverständlich ist auch eine Software-Implementation möglich.

Je nach den praktischen Gegebenheiten kann das erfindungsgemäße Einbettungskonzept bzw. das erfindungsgemäße Extraktionskonzept in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Einbettungsverfahrens oder des erfindungsgemäßen Extraktionsverfahrens, wenn das Computerprogrammprodukt auf einem Rechner abläuft. In anderen Worten ausgedrückt stellt die Erfindung somit ein Computerprogramm mit einem Programmcode zur Durchführung des Verfahrens zum Einbetten bzw. zum Extrahieren dar, wenn das Computerprogramm auf einem Computer abläuft.

**Patentansprüche**

1. Vorrichtung zum Einbetten von binären Nutzinformationen (122) in ein Trägersignal (110), das eine erste Folge von diskreten Werten aufweist, mit folgenden Merkmalen:

   einer Einrichtung (112) zum Umsetzen der ersten Folge von diskreten Werten in eine spektrale Darstellung (114) unter Verwendung eines Vorwärts-Ganzzahl-Transformationsalgorithmus, der ausgebildet ist, um einen Satz von ganzzahligen binären Spektraldarstellungswerten zu liefern, die Frequenzen in aufsteigender Reihenfolge darstellen, wobei zu modifizierende Spektraldarstellungswerte Bits aufweisen, und wobei jedem Bit eines zu modifizierenden Spektraldarstellungswerts eine andere Wertigkeit zugeordnet ist, wobei ein gesetztes Bit mit einer höchsten Wertigkeit in den Bits des Spektraldarstellungswerts ein führendes Bit des Spektraldarstellungswerts ist, und wobei alle restlichen Bits des Spektraldarstellungswerts eine niedrigere Wertigkeit als das führende Bit haben;
   einer Einrichtung (116) zum Bestimmen von Signal-Grenzwertigkeiten für die Spektraldarstellungswerte, wobei die Signal-Grenzwertigkeiten zumindest um eine Wertigkeitsstufe unter einer Wertigkeit des jeweils führenden Bits der Spektraldarstellungswerte ist;
   einer Einrichtung (120) zum Einstellen von Bits der Spektraldarstellungswerte, deren Wertigkeit gleich der Signal-Grenzwertigkeit oder kleiner als die Signal-Grenzwertigkeit sind, gemäß den binären Nutzinformationen (122), um modifizierte Spektraldarstellungswerte (124) zu erhalten, wobei Bits, deren Wertigkeiten größer als die Signal-Grenzwertigkeiten sind, für eine Nutzinformationen-Einbettung nicht zur Verfügung stehen; und
   einer Einrichtung (126) zum Umsetzen eines Satzes von ganzzahligen binären Spektraldarstellungswerten, in dem statt den zu modifizierenden Spektraldarstellungswerten die modifizierten Spektraldarstellungswerte enthalten sind, in eine zweite Folge von diskreten Werten (118) unter Verwendung eines Rückwärts-Ganzzahl-Transformationsalgorithmus, so daß die Nutzinformationen (122) in der zweiten Folge von Werten (118) eingebettet sind.

2. Vorrichtung nach Anspruch 1, bei der die Einrichtung (116) zum Bestimmen ausgebildet ist, um für mehrere binäre Spektraldarstellungswerte eine jeweilige Signal-Grenzwertigkeit zu bestimmen, wobei die Signal-Grenzwertigkeit für jeden binären Spektraldarstellungswert um dieselbe Anzahl (152) von Wertigkeitsstufen unter einer Wertigkeit des führenden Bits der entsprechenden Spektraldarstellungswerte ist.

3. Vorrichtung nach Anspruch 1 oder 2, bei der die Signal-Grenzwertigkeit um drei oder mehr Wertigkeitsstufen (152) unterhalb der Wertigkeit des führenden Bits ist.

4. Vorrichtung nach einem der vorhergehenden Ansprüche,
   bei der die Einrichtung (116) zum Bereitstellen ferner ausgebildet ist, um ohne Rücksicht auf die Wertigkeit des führenden Bits eines Spektraldarstellungswerts eine Ruhe-Grenzwertigkeit für den Spektraldarstellungswert zu bestimmen, die eine vorbestimmte Anzahl von Wertigkeitsstufen höher als eine niederste Wertigkeit eines Bits des Spektraldarstellungswerts ist, so daß die Einrichtung (120) zum Einstellen ohne Rücksicht auf eine für einen betrachteten Spektraldarstellungswert bestimmte Signal-Grenzwertigkeit Bits mit einer Wertigkeit einstellt, die kleiner oder gleich der Ruhe-Grenzwertigkeit ist.

5. Vorrichtung nach einem der vorhergehenden Ansprüche, bei der das Informationssignal ein Audiosignal ist, und bei der die Einrichtung (116) zum Bereitstellen ausgebildet ist, um unter Verwendung eines psychoakustischen Modells als Signal-Grenzwertigkeit die Wertigkeit eines Spektraldarstellungswerts zu bestimmen, die um eine Wertigkeitsstufe höher, gleich oder kleiner als eine Wertigkeit eines führenden Bits eines psychoakustischen Maskierungsschwelle für den Spektraldarstellungswert ist.

6. Vorrichtung nach Anspruch 5, bei der die Einrichtung (116) zum Bereitstellen ausgebildet ist, um die Signal-Grenzwertigkeit eines Spektraldarstellungswerts um eine Wertigkeitsstufe niedriger als ein führendes Bit einer psychoakustischen Maskierungsschwelle für den Spektraldarstellungswert zu setzen.

7. Vorrichtung nach Anspruch 5 oder 6, bei der die Einrichtung (116) zum Bestimmen ausgebildet ist, um unter Verwendung des psychoakustischen Modells die psychoakustische Maskierungsschwelle zu berechnen, wobei lediglich das führende Bit oder zusätzlich eine vorbestimmte Anzahl von Bits mit niedrigerer Wertigkeit zum Berechnen der psychoakustischen Maskierungsschwelle verwendet werden, und

wobei die Einrichtung (120) zum Einstellen ausgebildet ist, um das führende Bit des Spektraldarstellungswert oder zusätzlich die vorbestimmte Anzahl von Bits mit niedrigerer Wertigkeit des Spektraldarstellungswerts nicht zu manipulieren.

8. Vorrichtung nach einem der vorhergehenden Ansprüche,
bei der das Informationssignal mehrere Folgen von diskreten Werten aufweist, wobei die Einrichtung (120) zum Einstellen ferner ausgebildet ist, um in dem Satz von ganzzahligen binären Spektraldarstellungswerten Redundanzbits einzubringen, die einen Hinweis auf einen Beginn oder ein Ende einer Folge umfassen.

9. Vorrichtung nach Anspruch 8, bei der die Redundanzbits eine Prüfsumme darstellen, wobei in einer Anzahl von aufeinanderfolgenden Sätzen von ganzzahligen binären Spektraldarstellungswerten Prüfsummen eingebracht werden, die in einem vorbestimmten Zusammenhang zueinander stehen.

10. Vorrichtung nach einem der vorhergehenden Ansprüche,
bei der die Einrichtung (112) zum Umsetzen ausgebildet ist, um eine Folge umzusetzen, die zumindest 128 und höchstens 2048 diskrete Werte umfaßt.

11. Vorrichtung nach Anspruch 8, bei der die Einrichtung (120) zum Einstellen ausgebildet ist, um als Redundanzbits ein festgelegtes Bitmuster zu verwenden, das durch die Einrichtung (120) zum Einstellen in Bits mit niedrigerer Wertigkeit als einer Grenzwertigkeit in einen oder mehrere Spektraldarstellungswerte eingebracht werden, deren Frequenz bzw. deren Frequenzen oberhalb einer mittleren Frequenz des Satzes von binären Spektraldarstellungswerten liegt.

12. Vorrichtung nach Anspruch 8, bei der die Einrichtung (112) zum Umsetzen ausgebildet ist, um eine Länge der ersten Folge abhängig von einem Informationsgehalt des Trägersignals zu variieren, wobei die Einrichtung (120) zum Einstellen ausgebildet ist, um in jedem Block Redundanzbits einzubringen.

13. Vorrichtung nach einem der vorhergehenden Ansprüche, bei der das Trägersignal ein Audio-CD-kompatibles Audiosignal ist.

14. Vorrichtung nach einem der vorhergehenden Ansprüche, die ferner folgende Merkmale aufweisen:

eine Einrichtung zum Redundanz-Codieren von Ursprungs-Nutzinformationen um die einzubringenden Informationen in binärer Form zu erhalten, wobei die Nutzinformationen dieselbe Information wie die Ursprungs-Nutzinformationen darstellen, jedoch eine größere Datenredundanz als die Ursprungs-Nutzinformationen umfassen.

15. Vorrichtung nach einem der vorhergehenden Ansprüche, bei der die Nutzinformationen komprimierte Videodaten, Audiodaten oder eine komprimierte Version des Trägersignals selbst sind.

16. Vorrichtung nach einem der vorhergehenden Ansprüche, bei der der Vorwärts-Ganzzahl-Transformationsalgorithmus und der Rückwärts-Ganzzahl-Transformationsalgorithmus einen IntMDCT-Algorithmus umfassen.

17. Verfahren zum Einbetten von binären Nutzinformationen (122) in ein Trägersignal (110), das eine erste Folge von diskreten Werten aufweist, mit folgenden Schritten:

Umsetzen (112) der ersten Folge von diskreten Werten in eine spektrale Darstellung (114) unter Verwendung eines Vorwärts-Ganzzahl-Transformationsalgorithmus, der ausgebildet ist, um einen Satz von ganzzahligen binären Spektraldarstellungswerten zu liefern, die Frequenzen in aufsteigender Reihenfolge darstellen, wobei zu modifizierende Spektraldarstellungswerte Bits aufweisen, und wobei jedem Bit eines zu modifizierenden Spektraldarstellungswert eine andere Wertigkeit zugeordnet ist, wobei ein gesetztes Bit mit einer höchsten Wertigkeit in den Bits des Spektraldarstellungswerts ein führendes Bit des Spektraldarstellungswerts ist, und wobei alle restlichen Bits des Spektraldarstellungswerts eine niedrigere Wertigkeit als das führende Bit haben;
Bestimmen (116) von Signal-Grenzwertigkeiten für Spektraldarstellungswerte, wobei eine Signal-Grenzwertigkeit zumindest um eine Wertigkeitsstufe unter einer Wertigkeit des führenden Bits des jeweiligen Spektraldarstellungswerts ist;

Einstellen (120) von Bits der Spektraldarstellungswerte, deren Wertigkeiten gleich der Signal-Grenzwertigkeit oder kleiner als die Signal-Grenzwertigkeit sind, gemäß den binären Nutzinformationen (122), um modifizierte Spektraldarstellungswerte (124) zu erhalten, wobei Bits, deren Wertigkeiten größer als die Signal-Grenzwertigkeiten sind, für eine Nutzinformationen-Einbettung nicht zur Verfügung stehen; und

Umsetzen (126) eines Satzes von ganzzahligen binären Spektraldarstellungswerten, in dem statt der zu modifizierenden Spektraldarstellungswerte die modifizierten Spektraldarstellungswerte enthalten sind, in eine zweite Folge von diskreten Werten (118) unter Verwendung eines Rückwärts-Ganzzahl-Transformationsalgorithmus, so daß die Nutzinformationen (122) in der zweiten Folge von Werten (118) eingebettet sind.

18. Vorrichtung zum Extrahieren von Nutzinformationen aus einem modifizierten Trägersignal (130), das eine zweite Folge von diskreten Werten aufweist, in die die Nutzinformationen eingebracht sind, wobei die Nutzinformationen durch Einstellen von Bits von Spektraldarstellungswerten eingebracht sind, die Spektraldarstellungswerte aus einem Satz von ganzzahligen binären Spektraldarstellungswerten sind, wobei die Spektraldarstellungswerte Bits aufweisen, wobei jedem Bit eines Spektraldarstellungswerts eine andere Wertigkeit zugeordnet ist, wobei ein gesetztes Bit mit einer höchsten Wertigkeit in den Bits des Spektraldarstellungswerts ein führendes Bit des Spektraldarstellungswerts ist, und wobei alle restlichen Bits des Spektraldarstellungswerts eine niedrigere Wertigkeit als das führende Bit haben, wobei der Satz von ganzzahligen Spektraldarstellungswerten über ein Umsetzen einer ersten Folge von diskreten Werten in eine spektrale Darstellung unter Verwendung eines Vorwärts-Ganzzahl-Transformationsalgorithmus erzeugt wird, wobei der Transformationsalgorithmus ausgebildet ist, um den Satz von ganzzahligen binären Spektraldarstellungswerten zu liefern, die Frequenzen in aufsteigender Reihenfolge darstellen, und wobei die eingestellten Bits des Spektraldarstellungswerts Bits sind, deren Wertigkeit kleiner oder gleich einer Signal-Grenzwertigkeit sind, mit folgenden Merkmalen:

einer Einrichtung (132) zum Umsetzen der zweiten Folge von Abtastwerten unter Verwendung des Hin-Ganzzahl-Transformationsalgorithmus, um einen Extraktionssatz (133) von ganzzahligen binären Spektraldarstellungswerten zu erhalten, die Frequenzen in aufsteigender Reihenfolge darstellen,;

einer Einrichtung (134) zum Bereitstellen von Informationen über Signal-Grenzwertigkeiten, die den Spektraldarstellungswerten zugeordnet sind; und

einer Einrichtung (136) zum Extrahieren nur der Bits der Spektraldarstellungswerte, deren Wertigkeiten kleiner oder gleich den Signal-Grenzwertigkeiten sind, die den Spektraldarstellungswerten zugeordnet sind, wobei die extrahierten Bits die binären Nutzinformationen darstellen.

19. Vorrichtung nach Anspruch 18, bei der die Einrichtung (134) ausgebildet ist, um in der Vorrichtung zum Extrahieren gespeicherte Signal-Grenzwertigkeitsdaten (134a) bereitzustellen, wobei die gespeicherten Signal-Grenzwertigkeits-Daten voreingestellt sind oder als Seiteninformationen in dem modifizierten Trägersignal (130) enthalten sind.

20. Vorrichtung nach Anspruch 19, bei der die Seiteninformationen in das modifizierte Trägersignal nicht eingebettet sind.

21. Vorrichtung nach einem der Ansprüche 18 bis 20, bei der beim Einbetten der Nutzinformationen ohne Rücksicht auf die Wertigkeit des führenden Bits des Spektraldarstellungswerts eine Ruhe-Grenzwertigkeit verwendet wird, die eine vorbestimmte Anzahl von Wertigkeitsstufen höher als eine niederste Wertigkeit eines Bits des Spektraldarstellungswerts ist,

wobei die Einrichtung (134) zum Bereitstellen ausgebildet ist, um die Ruhe-Grenzwertigkeit für einen Spektraldarstellungswert bereitzustellen.

22. Vorrichtung nach einem der Ansprüche 18 bis 21, bei der beim Einbetten der Nutzinformationen die Signal-Grenzwertigkeit unter Verwendung eines psychoakustischen Modells berechnet worden ist,

wobei die Einrichtung (134) zum Bereitstellen ausgebildet ist, um unter Verwendung desselben psychoakustischen Modells die Informationen über die Signal-Grenzwertigkeit für einen Spektraldarstellungswert zu ermitteln.

23. Vorrichtung nach Anspruch 22, bei der beim Einbetten der Nutzinformationen die Signal-Grenzwertigkeit unter Verwendung des psychoakustischen Modells berechnet worden ist, wobei zur Bestimmung der Maskierungsschwelle lediglich die führenden Bits oder zusätzlich eine vorbestimmte Anzahl von Bits mit niedrigerer Wertigkeit verwendet worden sind,

wobei die Einrichtung (134) zum Bereitstellen ausgebildet ist, um zum Berechnen der Signal-Grenzwertigkeit für einen Spektraldarstellungswert lediglich pro Spektraldarstellungswert das führende Bit oder zusätzlich eine bestimmte Anzahl von Bits mit niedrigerer Wertigkeit des Extraktionssatzes (133) von ganzzahligen binären Spektraldarstellungswerten zu verwenden.

24. Vorrichtung nach einem der Ansprüche 18 bis 23, bei der beim Einbringen von Informationen Redundanzbits eingebracht worden sind, und

wobei die Vorrichtung zum Extrahieren ferner eine Einrichtung zum Bestimmen eines Blockrasters aufweist, das beim Einbetten der Informationen verwendet worden ist, wobei die Einrichtung zum Bestimmen des Blockrasters ausgebildet ist, um iterativ die Einrichtung (132) zum Umsetzen, die Einrichtung (134) zum Bereitstellen und die Einrichtung (136) zum Extrahieren anzusteuern, um die Redundanzbits zu extrahieren, und

wobei die Einrichtung zum Ermitteln des Blockrasters ferner ausgebildet ist, um ein Blockraster als korrektes Blockraster zu identifizieren, bei dem die Prüfsummen von zeitlich folgenden Blöcken eine vorbestimmte Beziehung zueinander haben.

25. Vorrichtung nach Anspruch 24, bei der beim Einbetten von Informationen unterschiedliche Blocklängen verwendet werden, und bei der die Einrichtung zum Ermitteln des Blockrasters ferner ausgebildet ist, um die Einrichtung (132) zum Umsetzen anzusteuern, um verschiedene Blocklängen zu testen, um dann eine Blocklänge und ein Blockraster als korrekt zu identifizieren, wenn extrahierte Prüfsummen für eine Mehrzahl von Blöcken in einer vorbestimmten Beziehung zueinander sind.

26. Vorrichtung nach einem der Ansprüche 18 bis 25, bei der das Trägersignal ein Audiosignal ist, bei der die Nutzinformationen eine komprimierte Version des Audiosignals umfassen, und die ferner folgende Merkmale aufweist:

eine Schnittstelle für eine schnittstellenmäßige Verbindung der Vorrichtung zum Extrahieren mit einer Vorrichtung zum Abspielen des komprimierten Audiosignals.

27. Vorrichtung nach Anspruch 26, bei der die Schnittstelle eine Schnittstelle für eine tragbare Vorrichtung zum Abspielen des komprimierten Audiosignals ist.

28. Verfahren zum Extrahieren von Nutzinformationen aus einem modifizierten Trägersignal (130), das eine zweite Folge von diskreten Werten aufweist, in die die Nutzinformationen eingebracht sind, wobei die Nutzinformationen durch Einstellen von Bits von Spektraldarstellungswerten eingebracht sind, die Spektraldarstellungswerte aus einem Satz von ganzzahligen binären Spektraldarstellungswerten sind, wobei die Spektraldarstellungswerte Bits aufweisen, wobei jedem Bit eines Spektraldarstellungswerts eine andere Wertigkeit zugeordnet ist, wobei ein gesetztes Bit mit einer höchsten Wertigkeit in den Bits des Spektraldarstellungswerts ein führendes Bit des Spektraldarstellungswerts ist, und wobei alle restlichen Bits des Spektraldarstellungswerts eine niedrigere Wertigkeit als das führende Bit haben, wobei der Satz von ganzzahligen Spektraldarstellungswerten über ein Umsetzen einer ersten Folge von diskreten Werten in eine spektrale Darstellung unter Verwendung eines Vorwärts-Ganzzahl-Transformationsalgorithmus erzeugt worden ist, wobei der Transformationsalgorithmus ausgebildet ist, um den Satz von ganzzahligen binären Spektraldarstellungswerten zu liefern, die Frequenzen in aufsteigender Reihenfolge darstellen, und wobei die eingestellten Bits des Spektraldarstellungswerts Bits sind, deren Wertigkeit kleiner oder gleich einer Signal-Grenzwertigkeit sind, mit folgenden Schritten:

Umsetzen (132) der zweiten Folge von Abtastwerten unter Verwendung des Hin-Ganzzahl-Transformationsalgorithmus, um einen Extraktionssatz (133) von ganzzahligen binären Spektraldarstellungswerten zu erhalten, die Frequenzen in aufsteigender Reihenfolge darstellen,;

Bereitstellen (134) von Informationen über Signal-Grenzwertigkeiten, die den Spektraldarstellungswert zugeordneten sind; und

Extrahieren (136) nur der Bits der Spektraldarstellungswerte, deren Wertigkeiten kleiner oder gleich der Signal-Grenzwertigkeiten sind, die den Spektraldarstellungswerten zugeordnet sind, wobei die extrahierten Bits die binären Nutzinformationen darstellen.

29. Computer-Programm mit einem Programmcode zur Durchführung des Verfahrens gemäß Anspruch 17 oder gemäß Anspruch 28.

**Claims**

1. Device for embedding binary payload (122) into a carrier signal (110) comprising a first sequence of discrete values, the device comprising:

> means (112) for converting the first sequence of discrete values to a spectral representation (114) using a forward integer transform algorithm configured to provide a set of integer binary spectral representation values representing frequencies in an ascending order, wherein spectral representation values to be modified comprise bits, and wherein a different valency is associated with each bit of a spectral representation value to be modified, wherein a set bit with a highest valency in the bits of the spectral representation value is a leading bit of the spectral representation value, and wherein all remaining bits of the spectral representation value have a lower valency than the leading bit;
> means (116) for determining signal limit valencies for the spectral representation values, wherein the signal limit valencies are at least one valency level below a valency of the respective leading bit of the spectral representation values;
> means (120) for setting bits of the spectral representation values whose valencies are equal to the signal limit valency or less than the signal limit valency according to the binary payload (122) to obtain modified spectral representation values (124), wherein bits whose valencies are greater than the signal limit valencies are not available for payload embedding; and
> means (126) for converting a set of integer binary spectral representation values, in which the modified spectral representation values are contained instead of the spectral representation values to be modified, to a second sequence of discrete values (118) using a backward integer transform algorithm so that the payload (122) is embedded in the second sequence of values (118).

**2.** Device of claim 1, wherein the means (116) for determining is configured to determine a respective signal limit valency for several binary spectral representation values, wherein the signal limit valency for each binary spectral representation value is below a valency of the leading bit of the corresponding spectral representation values by the same number (152) of valency levels.

**3.** Device of claim 1 or 2, wherein the signal limit valency is three or more valency levels (152) below the valency of the leading bit.

**4.** Device according to one of the preceding claims,
wherein the means (116) for providing is further configured to determine a quiet limit valency for the spectral representation value, without consideration for the valency of the leading bit of a spectral representation value, which is a predetermined number of valency levels higher than a lowest valency of a bit of the spectral representation value, so that the means (120) for setting sets bits with a valency less or equal to the quiet limit valency without consideration for a signal limit valency determined for a considered spectral representation value.

**5.** Device according to one of the preceding claims, wherein the information signal is an audio signal, and wherein the means (116) for providing is configured to determine the valency of a spectral representation value, using a psychoacoustic model as signal limit valency, which is higher by one valency level, equal to or less than a valency of a leading bit of a psychoacoustic masking threshold for the spectral representation value.

**6.** Device of claim 5, wherein the means (116) for providing is configured to set the signal limit valency of a spectral representation value one valency level lower than a leading bit of a psychoacoustic masking threshold for the spectral representation value.

**7.** Device of claim 5 or 6, wherein the means (116) for determining is configured to calculate the psychoacoustic masking threshold using the psychoacoustic model, wherein only the leading bit or additionally a predetermined number of bits with lower valency are used for calculating the psychoacoustic masking threshold, and
wherein the means (120) for setting is configured not to manipulate the leading bit of the spectral representation value or additionally the predetermined number of bits with lower valency of the spectral representation value.

**8.** Device according to one of the preceding claims,
wherein the information signal comprises several sequences of discrete values, wherein the means (120) for setting is further configured to insert redundancy bits in the set of integer binary spectral representation values, which include an indication of a start or an end of a sequence.

**9.** Device of claim 8, wherein the redundancy bits represent a checksum, wherein, in a number of consecutive sets of integer binary spectral representation values, checksums are inserted which have a predetermined relation to each other.

10. Device according to one of the preceding claims, wherein the means (112) for converting is configured to convert a sequence including at least 128 and at the most 2048 discrete values.

11. Device of claim 8, wherein the means (120) for setting is configured to use a set bit pattern as redundancy bits which is inserted by the means (120) for setting in bits with lower valency than a limit valency in one or more spectral representation values whose frequency and/or whose frequencies is/are above an average frequency of the set of binary spectral representation values.

12. Device of claim 8, wherein the means (112) for converting is configured to vary a length of the first sequence depending on an information content of the carrier signal, wherein the means (120) for setting is configured to insert redundancy bits in each block.

13. Device according to one of the preceding claims, wherein the carrier signal is an audio CD-compatible audio signal.

14. Device according to one of the preceding claims, further comprising:

means for redundancy-coding original payload to obtain the information to be inserted in binary form, wherein the payload represents the same information as the
original payload, but includes a higher data redundancy than the original payload.

15. Device according to one of the preceding claims, wherein the payload is compressed video data, audio data or a compressed version of the carrier signal itself.

16. Device according to one of the preceding claims, wherein the forward integer transform algorithm and the backward integer transform algorithm include an IntMDCT algorithm.

17. Method for embedding binary payload (122) into a carrier signal (110) comprising a first sequence of discrete values, the method comprising:

converting (112) the first sequence of discrete values to a spectral representation (114) using a forward integer transform algorithm configured to provide a set of integer binary spectral representation values representing frequencies in an ascending order, wherein spectral representation values to be modified comprise bits, and wherein a different valency is associated with each bit of a spectral representation value to be modified, wherein a set bit with a highest valency in the bits of the spectral representation value is a leading bit of the spectral representation value, and wherein all remaining bits of the spectral representation value have a lower valency than the leading bit;
determining (116) signal limit valencies for the spectral representation values, wherein a signal limit valency is at least one valency level below a valency of the leading bit of the respective spectral representation value;
setting (120) bits of the spectral representation values whose valencies are equal to the signal limit valency or less than the signal limit valency according to the binary payload (122) to obtain modified spectral representation values (124), wherein bits whose valencies are greater than the signal limit valencies are not available fo payload embedding; and
converting (126) a set of integer binary spectral representation values, in which the modified spectral representation values are contained instead of the spectral representation values to be modified, to a second sequence of discrete values (118) using a backward integer transform algorithm so that the payload (122) is embedded in the second sequence of values (118).

18. Device for extracting payload from a modified carrier signal (130) comprising a second sequence of discrete values in which the payload is inserted, wherein the payload is inserted by setting bits of spectral representation values which are spectral representation values from a set of integer binary spectral representation values, wherein the spectral representation values comprise bits, wherein a different valency is associated with each bit of a spectral representation value, wherein a set bit with a highest valency in the bits of the spectral representation value is a leading bit of the spectral representation value, and wherein all remaining bits of the spectral representation value have a lower valency than the leading bit, wherein the set of integer spectral representation values is generated via converting a first sequence of discrete values to a spectral representation using a forward integer transform algorithm,

EP 1 604 527 B1

wherein the transform algorithm is configured to provide the set of integer binary spectral representation values representing frequencies in an ascending order, and wherein the set bits of the spectral representation value are bits whose valency is less than or equal to a signal limit valency, the device comprising:

means (132) for converting the second sequence of samples using the forward integer transform algorithm to obtain an extraction set (133) of integer binary spectral representation values representing frequencies in an ascending order;

means (134) for providing information on signal limit valencies associated with the spectral representation values; and

means (136) for extracting only the bits of the spectral representation values whose valencies are less than or equal to the signal limit valencies associated with the spectral representation values, wherein the extracted bits represent the binary payload.

19. Device of claim 18, wherein the means (134) is configured to provide stored signal limit valency data (134a) in the device for extracting, wherein the stored signal limit valency data are pre-set or contained as side information in the modified carrier signal (130).

20. Device of claim 19, wherein the side information is not embedded in the modified carrier signal.

21. Device according to one of claims 18 to 20, wherein, in embedding the payload, a quiet limit valency is used, without consideration for the valency of the leading bit of the spectral representation value, which is a predetermined number of valency levels higher than a lowest valency of a bit of the spectral representation value, wherein the means (134) for providing is configured to provide the quiet limit valency for a spectral representation value.

22. Device according to one of claims 18 to 21, wherein, in embedding the payload, the signal limit valency has been calculated using a psychoacoustic model, wherein the means (134) for providing is configured to determine the information on the signal limit valency for a spectral representation value using the same psychoacoustic model.

23. Device of claim 22, wherein, in embedding the payload, the signal limit valency has been calculated using the psychoacoustic model, wherein only the leading bits or additionally a predetermined number of bits with lower valency have been used for determining the masking threshold, wherein the means (134) for providing is configured to use only the leading bit or additionally a predetermined number of bits with lower valency of the extraction set (133) of integer binary spectral representation values per spectral representation value for calculating the signal limit valency for a spectral representation value.

24. Device according to one of claims 18 to 23, wherein redundancy bits have been inserted in the embedding of information, and wherein the device for extracting further comprises means for determining a block raster which has been used in the embedding of the information, wherein the means for determining the block raster is configured to iteratively drive the means (132) for converting, the means (134) for providing and the means (136) for extracting to extract the redundancy bits, and wherein the means for determining the block raster is further configured to identify a block raster as correct block raster in which the checksums of temporally consecutive blocks have a predetermined relation to each other.

25. Device of claim 24, wherein different block lengths are used in the embedding of information, and wherein the means for determining the block raster is further configured to drive the means (132) for converting to test various block lengths to identify a block length and a block raster as correct when extracted checksums for a plurality of blocks have a predetermined relation to each other.

26. Device according to one of claims 18 to 25, wherein the carrier signal is an audio signal, wherein the payload includes a compressed version of the audio signal, and which further comprises:

an interface for an interface connection of the device for extracting with a device for replaying the compressed audio signal.

27. Device of claim 26, wherein the interface is an interface for a portable device for replaying the compressed audio

24

signal.

28. Method for extracting payload from a modified carrier signal (130) comprising a second sequence of discrete values in which the payload is inserted, wherein the payload is inserted by setting bits of spectral representation values which are spectral representation values from a set of integer binary spectral representation values, wherein the spectral representation values comprise bits, wherein a different valency is associated with each bit of a spectral representation value, wherein a set bit with a highest valency in the bits of the spectral representation value is a leading bit of the spectral representation value, and wherein all remaining bits of the spectral representation value have a lower valency than the leading bit, wherein the set of integer spectral representation values has been generated via converting a first sequence of discrete values to a spectral representation using a forward integer transform algorithm, wherein the transform algorithm is configured to provide the set of integer binary spectral representation values representing frequencies in an ascending order, and wherein the set bits of the spectral representation value are bits whose valency is less than or equal to a signal limit valency, the method comprising:

converting (132) the second sequence of samples using the forward integer transform algorithm to obtain an extraction set (133) of integer binary spectral representation values representing frequencies in an ascending order;
providing (134) information on signal limit valencies associated with the spectral representation values; and
extracting (136) only the bits of the spectral representation values whose valencies are less than or equal to the signal limit valencies associated with the spectral representation values, wherein the extracted bits represent the binary payload.

29. Computer program with a program code for performing the method of claim 17 or claim 28.

**Revendications**

1. Dispositif pour incorporer des informations utiles binaires (122) dans un signal porteur (110) présentant une première succession de valeurs discrètes, aux caractéristiques suivantes :

un dispositif (112) destiné à convertir la première succession de valeurs discrètes en une représentation spectrale (114) à l'aide d'un algorithme de transformation de nombre entier direct qui est réalisé de manière à fournir un ensemble de valeurs de représentation spectrale binaires de nombre entier représentant des fréquences dans l'ordre croissant, les valeurs de représentation spectrale à modifier présentant des bits, et à chaque bit d'une valeur de représentation spectrale à modifier étant associée une valence, un bit réglé avec une valence la plus élevée dans les bits de la valeur de représentation spectrale étant un bit principal de la valeur de représentation spectrale, et tous les bits restants de la valeur de représentation spectrale ayant une valence inférieure à celle du bit principal ;
un dispositif (116) destiné à déterminer les valeurs limites de signal pour les valeurs de représentation spectrales, les valeurs limites de signal étant inférieures d'au moins un niveau de valence à une valence du bit principal respectif des valeurs de représentation spectrale ;
un dispositif (120) destiné à régler les bits des valeurs de représentation spectrale dont la valence est égale à la valence limite de signal ou inférieure à la valence limite de signal, selon les informations utiles binaires (122), pour obtenir des valeurs de représentation spectrale modifiées (124), les bits dont les valences sont supérieures aux valences limites de signal n'étant pas disponibles pour une incorporation d'informations utiles ; et
un dispositif (126) destiné à convertir un ensemble de valeurs de représentation spectrale binaires de nombre entier, dans lequel sont contenus, au lieu des valeurs de représentation spectrale à modifier, les valeurs de représentation spectrale modifiées, en une deuxième succession de valeurs discrètes (118) à l'aide d'un d'algorithme de transformation de nombre entier inverse, de sorte que les informations utiles (122) soient incorporées dans la deuxième succession de valeurs (118).

2. Dispositif selon la revendication 1, dans lequel le dispositif (116) destiné à déterminer est réalisé de manière à déterminer, pour plusieurs valeurs de représentation spectrale binaires, une valence limite de signal respective, la valence limite de signal pour chaque valeur de représentation spectrale binaire étant inférieure du même nombre (152) de niveaux de valence à une valence du bit principal des valeurs de représentation spectrale correspondantes.

3. Dispositif selon la revendication 1 ou 2, dans lequel la valence limite de signal est inférieure de trois niveaux de valence (152) ou plus à la valence du bit principal.

**4.** Dispositif selon l'une des revendications précédentes,
dans lequel le dispositif (116) destiné à préparer est, par ailleurs, réalisé de manière à déterminer, sans tenir compte de la valence du bit principal, une valeur de représentation spectrale d'une valence limite de repos pour la valeur de représentation spectrale qui est supérieure d'un nombre prédéterminé de niveaux de valence à une valence la plus basse d'un bit de la valeur de représentation spectrale, de sorte que le dispositif (120) destiné à régler règle, sans tenir compte d'une valence limite de signal déterminée pour une valeur de représentation spectrale considérée, les bits avec une valence inférieure ou égale à la valence limite de repos.

**5.** Dispositif selon l'une des revendications précédentes, dans lequel le signal d'information est un signal audio, et dans lequel le dispositif (116) destiné à préparer est réalisé de manière à déterminer, à l'aide d'un modèle psycho-acoustique comme valence limite de signal, la valence d'une valeur de représentation spectrale qui est supérieure, égale ou inférieure à une valence d'un bit principal d'un seuil de masquage psycho-acoustique pour la valeur de représentation spectrale.

**6.** Dispositif selon la revendication 5, dans lequel le dispositif (116) destiné à préparer est réalisé de manière à régler la valence limite de signal d'une valeur de représentation spectrale d'un niveau de valence inférieure à un bit principal d'un seuil de masquage psycho-acoustique pour la valeur de représentation spectrale.

**7.** Dispositif selon la revendication 5 ou 6, dans lequel le dispositif (116) destiné à préparer est réalisé de manière à calculer, à l'aide du modèle psycho-acoustique, le seuil de masquage psycho-acoustique, seul le bit principal ou, en outre, un nombre prédéterminé de bits de valence inférieure étant utilisés pour le calcul du seuil de masquage psycho-acoustique, et
le dispositif (120) destiné à régler étant réalisé de manière à ne pas manipuler le bit principal de la valeur de représentation spectrale ou, en outre, le nombre prédéterminé de bits de valence inférieure de la valeur de représentation spectrale.

**8.** Dispositif selon l'une des revendications précédentes, dans lequel le signal d'information présente plusieurs successions de valeurs discrètes, le dispositif (120) destiné à régler étant réalisé de manière à introduire dans l'ensemble de valeurs de représentation spectrale binaires de nombre entier des bits de redondance qui comportent une indication sur un début ou une fin d'une succession.

**9.** Dispositif selon la revendication 8, dans lequel les bits de redondance représentent une somme de contrôle, dans un certain nombre d'ensembles successifs de valeurs de représentation spectrale binaires de nombre entier étant introduites des sommes de contrôle qui ont un rapport prédéterminé entre elles.

**10.** Dispositif selon l'une des revendications précédentes,
dans lequel le dispositif (112) destiné à convertir est réalisé de manière à convertir une succession qui comporte au moins 128 et tout au plus 2048 valeurs discrètes.

**11.** Dispositif selon la revendication 8, dans lequel le dispositif (120) destiné à régler est réalisé de manière à utiliser, comme bits de redondance, un modèle binaire fixe qui est introduit par le dispositif (120) destiné à régler en bits à valence inférieure à une valence limite dans une ou plusieurs valeurs de représentation spectrale dont la fréquence ou dont les fréquences se situent au-dessus d'une fréquence moyenne de l'ensemble de valeurs de représentation spectrale binaires.

**12.** Dispositif selon la revendication 8, dans lequel le dispositif (112) destiné à convertir est réalisé de manière à faire varier une longueur de la première succession en fonction d'un contenu d'informations du signal porteur, le dispositif (120) destiné à régler étant réalisé de manière a introduire dans chaque bloc des bits de redondance.

**13.** Dispositif selon l'une des revendications précédentes, dans lequel le signal porteur est un signal audio compatible avec un CD audio.

**14.** Dispositif selon l'une des revendications précédentes, présentant, par ailleurs, les caractéristiques suivantes :

un dispositif pour le codage à redondance d'informations utiles originales, pour obtenir les informations à incorporer sous forme binaire, les informations utiles représentant la même information que les informations utiles originales, mais comprenant toutefois une plus grande redondance de données que les informations utiles originales.

**15.** Dispositif selon l'une des revendications précédentes, dans lequel les informations utiles sont des données vidéo, des données audio comprimées ou une version comprimée du signal porteur lui-même.

**16.** Dispositif selon l'une des revendications précédentes, dans lequel l'algorithme de transformation de nombre entier direct et l'algorithme de transformation de nombre entier inverse comprennent un algorithme de transformation IntMDCT.

**17.** Procédé pour incorporer des informations utiles binaires (122) dans un signal porteur (110) présentant une première succession de valeurs discrets, aux étapes suivantes consistant à :

convertir (112) la première succession de valeurs discrètes en une représentation spectrale (114) à l'aide d'un algorithme de transformation de nombre entier direct qui est réalisé de manière à fournir un ensemble de valeurs de représentation spectrale binaires de nombre entier représentant des fréquences dans l'ordre croissant, les valeurs de représentation spectrale à modifier présentant des bits, et à chaque bit d'une valeur de représentation spectrale à modifier étant associée une autre valence, un bit réglé avec une valence la plus élevée dans les bits de la valeur de représentation spectrale étant un bit principal de la valeur de représentation spectrale, et tous les bits restants de la valeur de représentation spectrale ayant une valence inférieure à celle du bit principal ; déterminer (116) les valences limites de signal pour les valeurs de représentation spectrale, une valence limite de signal étant inférieure d'au moins un niveau de valence à une valence du bit principal de la valeur de représentation spectrale respective ; régler (120) les bits des valeurs de représentation spectrale dont les valences sont égales à la valence limite de signal ou inférieures à la valence limite de signal, selon les informations utiles binaires (122), pour obtenir des valeurs de représentation spectrale modifiées (124), les bits dont les valences sont supérieures aux valences limites de signal n'étant pas disponibles pour une incorporation d'informations utiles ; et convertir (126) un ensemble de valeurs de représentation spectrale binaires de nombre entier, dans lequel sont contenus, au lieu des valeurs de représentation spectrale à modifier, des valeurs de représentation spectrale modifiées, en une deuxième succession de valeurs discrètes (118) à l'aide d'un algorithme de transformation de nombre entier inverse, de sorte que les informations utiles (122) soient incorporées dans la deuxième succession de valeurs (118).

**18.** Dispositif pour extraire des informations utiles d'un signal porteur modifié (130) présentant une deuxième succession de valeurs discrètes dans laquelle sont introduites les informations utiles, les informations utiles étant introduites en réglant les bits de valeurs de représentation spectrale, les valeurs de représentation spectrale provenant d'un ensemble de valeurs de représentation spectrale binaires de nombre entier, les valeurs de représentation spectrale présentant des bits, à chaque bit d'une valeur de représentation spectrale étant associée une autre valence, un bit réglé avec une valence la plus élevée dans les bits de la valeur de représentation spectrale étant un bit principal de la valeur de représentation spectrale, et tous les bits restants de la valeur de représentation spectrale ayant une valence inférieure à celle du bit principal, l'ensemble de valeurs de représentation spectrale de nombre entier étant généré en convertissant une première succession de valeurs discrètes en une représentation spectrale à l'aide d'un algorithme de transformation de nombre entier direct, l'algorithme de transformation étant réalisé de manière à fournir l'ensemble de valeurs de représentation spectrale binaires de nombre entier qui représentent les fréquences dans l'ordre croissant, et les bits réglés de la valeur de représentation spectrale étant des bits dont la valence est inférieure ou égale à une valence limite de signal, avec les caractéristiques suivantes :

un dispositif (132) destiné à convertir la deuxième succession de valeurs de balayage à l'aide de l'algorithme de transformation de nombre entier direct, pour obtenir un ensemble d'extraction (133) de valeurs de représentation spectrale binaires de nombre entier représentant des fréquences dans l'ordre croissant ; un dispositif (134) destiné à préparer des informations sur les valences limites de signal qui sont associées aux valeurs de représentation spectrale ; et un dispositif (136) destiné à extraire uniquement les bits des valeurs de représentation spectrales dont les valences sont inférieures ou égales aux valences limites de signal qui sont associées aux valeurs de représentation spectrale, les bits extraits représentant les informations utiles binaires.

**19.** Dispositif selon la revendication 18, dans lequel le dispositif (134) est réalisé de manière à préparer dans le dispositif destiné à extraire des données de valence limite de signal mémorisées (134a), les données de valence limite de signal mémorisées étant préréglées ou étant contenues comme informations latérales dans le signal porteur modifié (130).

**20.** Dispositif selon la revendication 19, dans lequel les informations latérales ne sont pas incorporées dans le signal porteur modifié.

**21.** Dispositif selon l'une des revendications 18 à 20, dans lequel est utilisée, lors de l'incorporation des informations utiles, sans tenir compte de la valence du bit principal de la valeur de représentation spectrale, une valence limite de repos qui est supérieure d'un nombre prédéterminé de niveaux de valence à une valence la plus basse d'un bit de la valeur de représentation spectrale,
le dispositif (134) destiné à préparer étant réalisé de manière à préparer la valence limite de repos pour une valeur de représentation spectrale.

**22.** Dispositif selon l'une des revendications 18 à 21, dans lequel la valence limite de signal a été calculée, lors de l'incorporation des informations utiles, à l'aide d'un modèle psycho-acoustique,
le dispositif (134) destiné à préparer étant réalisé de manière à déterminer, à l'aide du même modèle psycho-acoustique, les informations sur la valence limite de signal pour une valeur de représentation spectrale.

**23.** Dispositif selon la revendication 22, dans lequel la valence limite de signal a été calculée, lors de l'incorporation des informations utiles, à l'aide du modèle psycho-acoustique, pour la détermination du seuil de masquage ayant été utilisés uniquement les bits principaux ou, en outre, un nombre prédéterminé de bits à valence inférieure,
le dispositif (134) destiné à préparer étant réalisé de manière à n'utiliser, pour le calcul de la valence limite de signal pour une valeur de représentation spectrale, par valeur de représentation spectrale, que le bit principal ou, en outre, un nombre déterminé de bits à valence inférieure de l'ensemble d'extraction (133) de valeurs de représentation spectrale binaires de nombre entier.

**24.** Dispositif selon l'une des revendications 18 à 23, dans lequel sont introduits, lors de l'introduction d'informations, des bits de redondance, et
le dispositif destiné à extraire présentant, par ailleurs, un dispositif destiné à déterminer une trame de bloc qui a été utilisée lors de l'incorporation des informations, le dispositif destiné à déterminer la trame de bloc étant réalisé de manière à activer de manière itérative le dispositif (132) destiné à convertir, le dispositif (134) destiné à préparer et le dispositif (136) destiné à extraire, pour extraire les bits de redondance, et
le dispositif destiné à déterminer la trame de bloc étant, par ailleurs, réalisé de manière à identifier une trame de bloc comme trame de bloc correcte dans lequel les sommes de contrôle de blocs successifs dans le temps ont un rapport prédéterminé entre eux.

**25.** Dispositif selon la revendication 24, dans lequel sont utilisées, lors de l'incorporation d'informations, des longueurs de bloc différentes, et dans lequel le dispositif destiné à déterminer la trame de bloc est réalisé, par ailleurs, de manière à activer le dispositif (132) destiné à convertir, pour tester des longueurs de bloc différentes, pour identifier alors une longueur de bloc et une trame de bloc comme étant correctes lorsque les sommes de contrôle extraites pour une pluralité de blocs ont un rapport prédéterminé entre elles.

**26.** Dispositif selon l'une des revendications 18 à 25, dans lequel le signal porteur est un signal audio, dans lequel les informations utiles comprennent une version comprimée du signal audio, et qui comprend, par ailleurs, les caractéristiques suivantes :

une interface pour une connexion par l'interface entre le dispositif destiné à extraire et un dispositif destiné à reproduire le signal audio comprimé.

**27.** Dispositif selon la revendication 26, dans lequel l'interface est une interface pour un dispositif portatif destiné à reproduire le signal audio comprimé.

**28.** Procédé pour extraire des informations utiles d'un signal porteur modifié (130) présentant une deuxième succession de valeurs discrètes dans lesquelles sont introduites les informations utiles, les informations utiles étant introduites en réglant les bits de valeurs de représentation spectrale, les valeurs de représentation spectrale provenant d'un ensemble de valeurs de représentation spectrale binaires de nombre entier, les valeurs de représentation spectrale présentant des bits, à chaque bit d'une valeur de représentation spectrale étant associée une autre valence, un bit réglé avec une valence la plus grande dans les bits de la valeur de représentation spectrale étant un bit principal de la valeur de représentation spectrale, et tous les bits restants de la valeur de représentation spectrale ayant une valence inférieure à celle du bit principal, l'ensemble de valeurs de représentation spectrale de nombre entier étant généré par une conversion d'une première succession de valeurs discrètes en une représentation spectrale à l'aide d'un algorithme de transformation de nombre entier direct, l'algorithme de transformation étant réalisé de manière à fournir l'ensemble de valeurs de représentation spectrale binaires de nombre entier représentant des fréquences dans l'ordre croissant, et les bits réglés de la valeur de représentation spectrale étant des bits dont la valence est inférieure ou égale à une valence limite de signal, aux étapes suivantes consistant à :

convertir (132) la deuxième succession de valeurs de balayage à l'aide de l'algorithme de transformation de nombre entier direct, pour obtenir un ensemble d'extraction (133) de valeurs de représentation spectrale binaires de nombre entier représentant des fréquences dans l'ordre croissant ;

préparer (134) des informations sur les valences limites de signal qui sont associées à la valeur de représentation spectrale ; et

extraire (136) uniquement les bits des valeurs de représentation spectrale dont les valences sont inférieures ou égales aux valences limites de signal qui sont associées aux valeurs de représentation spectrale, les bits extraits représentant les informations utiles binaires.

29. Programme d'ordinateur avec un code de programme pour l'exécution du procédé selon la revendication 17 ou selon la revendication 28.

# FIG 1

Zeitdiskretes signal

110

Umsetzungseinrichtung mit Ganzzahltransformationsalgorithmus
(z.B.
— 112

116b

116

Einrichtung zum
Bestimmen der
Signal-Grenzwertigkeit eines Sp.-d.-werts

116a

fest
vereinbart

114

116b

ganzzahlige spektrale
Darstellung des Signals

120

122

einzubringende
Informationen
in binärer Form

Einrichtung zum
Einstellen von Bits
der SDW mit gleicher
oder kleinerer Wertigk.
als Signalgrenzwertigk.

Signal-Grenzwertigkeit
für Spektraldarstellungswerte

124

modifizierte spektrale
Darstellung mit eingebrachten
Informationen

Umsetzungseinr.
mit Ganzzahl-
Rücktransformationsalgorithmus
— 126

118

Zeitdiskretes Signal mit
eingebrachten Informationen

# FIG 2

Zeitdiskretes Signal
mit eingebrachten
Inform.

130

Umsetzungseinr.
mit Ganzzahl-
Transform.-alg.

132

134b

134

modifizierte
Spektraldarstellungswerte

133

134c

Einrichtg.
zum Bereitstellen von
Infos über
Signal-Grenzwertigkeit

fest vereinbart

134a

Informationsextraktionseinrichtung

136

138

extrahierte Informationen

## FIG 3

140 142 144 146 148

|  |  |  |  |  | MSB |
|---|---|---|---|---|---|
| 0 | 0 | 1 | 0 | 0 | $2^7$ |
| 1 | 0 | 0 | 0 | 0 | $2^6$ |
| 1 | 0 | 1 | 1 | 0 | $2^5$ |
| 0 | 0 | 1 | 0 | 0 | $2^4$ |
| 1 | 1 | 0 | 1 | 0 | $2^3$ |
| 0 | 0 | 1 | 0 | 1 | $2^2$ |
| 0 | 0 | 0 | 0 | 1 | $2^1$ |
| 1 | 1 | 0 | 1 | 0 | $2^0$ |

152

Wertigkeit

13 Informationsbit

Frequenz

LSB

150

| 1 | Führende Bits |
|---|---|
|  | Bits nutzbar für Einbettung von Zusatzdaten |

## fig 4

140 142 144 146 148

|  |  |  |  |  | MSB |
|---|---|---|---|---|---|
| 0 | 0 | 1 | 0 | 0 | $2^7$ |
| 1 | 0 | 0 | 0 | 0 | $2^6$ |
| 1 | 0 | 1 | 1 | 0 | $2^5$ |
| 0 | 0 | 1 | 0 | 0 | $2^4$ |
| 1 | 1 | 0 | 1 | 0 | $2^3$ |
| 0 | 0 | 1 | 0 | 1 | $2^2$ |
| 0 | 0 | 0 | 0 | 1 | $2^1$ |
| 1 | 1 | 0 | 1 | 0 | $2^0$ |

152

Wertigkeit

20 Informationsbit

Frequenz

LSB

| 1 | Führende Bits |
|---|---|
|  | Bits nutzbar für Einbettung von Zusatzdaten |

# FIG 5

160

110

CD-PCM-Samples

Einbetter

Informat.

Audiokomprimierer

162

122

PCM-Samples mit
eingebrachten Informationen

118

164

CD-Brenner

CD-Rohling

166

168

CD mit Audiosignal, in das eine
komprimierte Version zusammen
unhörbar eingebettet ist

## FIG 6

CD  (von Fig 5)

Extraktor  ⌇‑170

138 ⌇ komprimiertes
Audiosignal

Solid State Player...
mit Audiodecodierer  ⌇‑172    174

dekomprimiertes/
decodiertes
Audiosignal

## FIG 7A

402

zeitdiskr.
AW
→
| Fenstern mit Fensterlänge 2N | 402
2N gefenst. AW
→
| MDCT | 408
→ N Spektralwerte (1. Fenster)

50 % Overlap — 406

404

| Fenstern Länge 2N | 404
2N gefenst. AW
→
| MDCT | 410
→ N Spektralwerte (2. Fenster)

## FIG 7B

412

N SW
1. Fenster
→
| MDCT $^{-1}$ | 412
2 N AW 1. Fenster
→

414

N SW
1. Fenster
→
| MDCT $^{-1}$ | 414
2 N AW 2. Fenster
→

TDAC 416

$Y_1 (N+k) + Y_2(k)$ → N AW

# FIG 8

FIG 9

# FIG 10